# EUROPEAN PATENT APPLICATION

(11) **EP 3 285 088 A1**
(43) Date of publication of application: **21.02.2018**
(21) Application number: 17176987.0
(22) Date of filing: 20.06.2017
(51) Int. Cl.: G01S 17/74, G01S 1/70

(54) **BEACON DEVICE AND BEACON COMMUNICATION SYSTEM**

(30) Priority: 18.08.2016 US 201615239963; 17.02.2017 US 201715435689
(71) Applicant: Cejay Engineering, LLC, Bonita Springs, FL 34134 (US)
(72) Inventor: HAYNES, Derek, Bonita Springs, Florida 34134 (US); LEMKE, Guido Albert, New York, 12533 (US); HAYNES, Mark, Nashua, New Hampshire 03064 (US)
(74) Representative: Finnegan Europe LLP

(57) **Abstract**

A beacon device for control by a beacon controller external to the beacon device. The beacon device includes a beacon emitter configured to emit beacon signals, a microcontroller coupled to control the beacon emitter, and a communication module coupled to the microcontroller and configured to transfer signals between the beacon device and the beacon controller.

## Description

### Field of the Disclosure

The present disclosure relates to beacon devices and beacon communication systems including the beacon devices.

### Background

The inability during reconnaissance operations to distinguish between friend and foe in low light or total darkness is a major failing of battlefield and law enforcement operations. In these types of lighting conditions, not only does the probability of fratricide (the inadvertent killing of friendly forces by other friendly forces) increase, but time and resources are wasted during attempts to confirm identification. Furthermore, during the heat of battle, mistakes in identification are more likely to occur. Accordingly, there is a need to facilitate effortless and accurate nighttime identification and classification of a distant target or location by a remote sensor.

To this end, beacons have been used in conjunction with night vision equipment including light-intensifying systems that operate by amplifying visible and near infrared light. Beacons emit unique flashing infrared or thermal signatures referred to as signaling programs that are distinguished from operational surroundings by means of intense concentrated energy pulses. Although invisible to the naked eye, signaling programs emitted by beacons can be seen through fog, smoke, and darkness when viewed through night vision or thermal imaging forward looking infrared (FLIR) observation devices.

In order to change the signaling programs or other settings of beacons, the beacons need to be physically connected to a servicing facility, so that it is nearly impossible to control the beacons in the battlefield or during law enforcement operations in real time.

### SUMMARY

According to an embodiment of the disclosure, a beacon device for control by a beacon controller external to the beacon device is provided. The beacon device includes a beacon emitter configured to emit beacon signals, a microcontroller coupled to control the beacon emitter, and a communication module coupled to the microcontroller and configured to transfer signals between the beacon device and the beacon controller.

According to another embodiment of the disclosure, a beacon controller for controlling a beacon device over a network is provided. The beacon controller includes a radio frequency transceiver configured to transfer radio frequency signals between the beacon controller and the beacon device for controlling the beacon device.

According to still another embodiment of the disclosure, a relay device for relaying communication between a beacon device and a beacon controller via an external network is provided. The relay device includes a network interface configured to facilitate transfer of signals between the network and the relay device, and a beacon interface configured to facilitate transfer of signals between the relay device and the beacon device.

The accompanying drawings, which are incorporated in and constitute a part of this application, illustrate disclosed embodiments and, together with the description, serve to explain the disclosed embodiments.

### BRIEF DESCRIPTION OF THE DRAWINGS

FIG. 1A is a perspective view showing a physical structure of an infrared (IR) beacon according to an illustrated embodiment.
FIG. 1B is an enlarged partial perspective view of the beacon of FIG. 1A when a solid cap is removed.
FIG. 2 is a block diagram of an IR beacon according to an illustrated embodiment.
FIG. 3 schematically illustrates beacon signals emitted by a set of synchro beacons, according to an illustrated embodiment.
FIG. 4 is a flow chart showing a process of controlling a leader beacon and a follower beacon in a set of synchro beacons, according to an illustrated embodiment.
FIG. 5 schematically illustrates beacon signals emitted by a set of cascade beacons, according to an illustrated embodiment.
FIG. 6 is a flow chart showing a process of controlling a leader beacon and a follower beacon in a set of cascade beacons, according to an illustrated embodiment.
FIG. 7 is a flow chart of a process of calibrating an oscillator in a beacon according to an illustrated embodiment.
FIG. 8 is a perspective view showing a beacon and a helmet mount for mounting the beacon to a soldier's helmet, according to an illustrated embodiment.
FIG. 9A is a perspective view showing a beacon and an attachment mount for mounting the beacon to a MOLLE system, according to an illustrated embodiment.
FIG. 9B is a perspective view of the beacon of FIG. 9A mounted to a strap of a MOLLE system via the attachment mount of FIG. 9A.
FIG. 10 is a block diagram of a beacon device according to an illustrated embodiment.
FIG. 11 schematically illustrates a beacon communication system according to an illustrated embodiment.
FIG. 12 schematically illustrates a relay device, according to an illustrated embodiment.
FIG. 13 schematically illustrates a beacon device, according to an illustrated embodiment.
FIG. 14 schematically illustrates a beacon communication system according to an illustrate embodiment.
FIG. 15 schematically illustrates a beacon device, according to an illustrated embodiment.
FIG. 16 schematically illustrates a beacon communication system according to an illustrated embodiment.
FIG. 17 schematically illustrates a beacon controller, according to an illustrated embodiment.

### DETAILED DESCRIPTION

Reference will now be made in detail to the present embodiments, examples of which are illustrated in the accompanying drawings. Wherever possible, the same reference numbers will be used throughout the drawings to refer to the same or like parts.

The present disclosure relates to a beacon system including at least one beacon device which is capable of recording a user entered signaling code and emitting beacon signals having the recorded signaling code. The beacon device is also capable of communicating with other beacon devices using peer-to-peer non-contact optical communication means, to transfer its signaling code and synchronization information to the other beacon devices. After a transfer, all beacon devices identically flash the same signaling code at the same time which, to an observer, will be seen as a stronger signal. Detailed descriptions related to the structure and operation of beacon devices are provided in U.S. Patent Application No. 15/239,963.

Programming relatively simple signaling patterns and functions on one or a small group of beacon devices can be accomplished while the beacon devices are deployed in a battle field or during law enforcement operations. More complex signaling patterns and functions that rely on synchronized signals from a multiplicity of beacon devices may require programming in a coordinated manner that is better implemented with the use of a servicing facility that can send commands to all the beacon devices of one or more groups that are to be deployed and can receive responses from the beacon devices indicating that these commands have been received and are being executed. To perform such programming, any number of different communication methods and protocols may be employed as best suited to meet the communication distance needs and communication environment considerations. Devices embodying capabilities to practice such communication methods are described in more detail below.

A group of beacon devices can be programmed and controlled by various methods. In some embodiments consistent with the present disclosure, the group of beacon devices can be programmed and controlled while being deployed in the field by beacon-to-beacon communication. The beacon-to-beacon communication can be achieved by using infrared signals, which is a line of sight method. Alternatively, the beacon-to-beacon communication can be achieved by using any other communication methods such as, for example, local radio, etc. The configuration of devices having such beacon-to-beacon communication capability enabling programming is described more fully below.

In some other embodiments consistent with the present disclosure, the group of beacon devices can be programmed or controlled with the use of a servicing facility. Such programming and control rely on a more complex infra-structure of, at least, the beacon device, but also offers advantages of control of many beacon devices and groups of beacon devices, making quick changes in programming possible upon detecting adverse external conditions such as jamming, or imitation by hostile forces, and/or in order to re-program, in real time, signaling patterns customized for friendly forces.

The specific method for programming and controlling beacon devices can be chosen from a plurality of methods disclosed herein, in real time, i.e., while the beacon devices are deployed, in response to changes in the operating environment of the beacon devices.

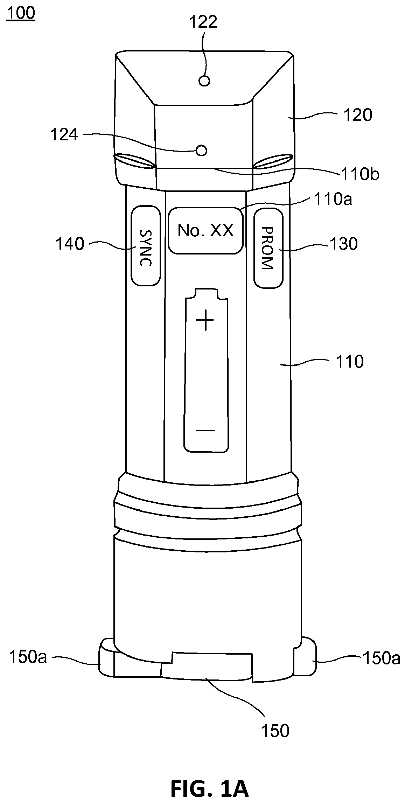

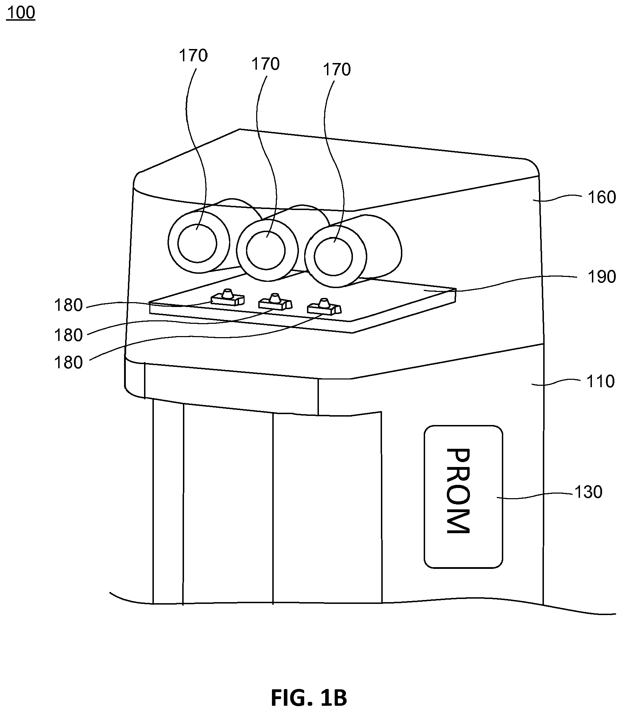

FIG. 1A is a perspective view showing a physical structure of an infrared (IR) beacon 100 (hereinafter referred to as a "beacon 100") according to an illustrated embodiment. FIG. 1B is an enlarged partial perspective view of the physical structure of beacon 100 when a solid cap is removed.

As illustrated in FIG. 1A, beacon 100 includes a housing 110, a solid cap 120 disposed on one end (e.g., top) of housing 110, a program ("PROM") button 130 disposed on one side of housing 110, a synchronization ("SYNC") button 140 disposed on an opposite side of housing 110, and a rotary switch 150 disposed on an opposite end (e.g., bottom) of housing 110. As illustrated in FIG. 1B, when solid cap 120 is removed, infrared beacon 100 further includes a transparent cap 160, three IR emitter LEDs 170, three indicator LEDs 180, and a control circuit 190 disposed on the end of housing 110 where solid cap 120 was disposed.

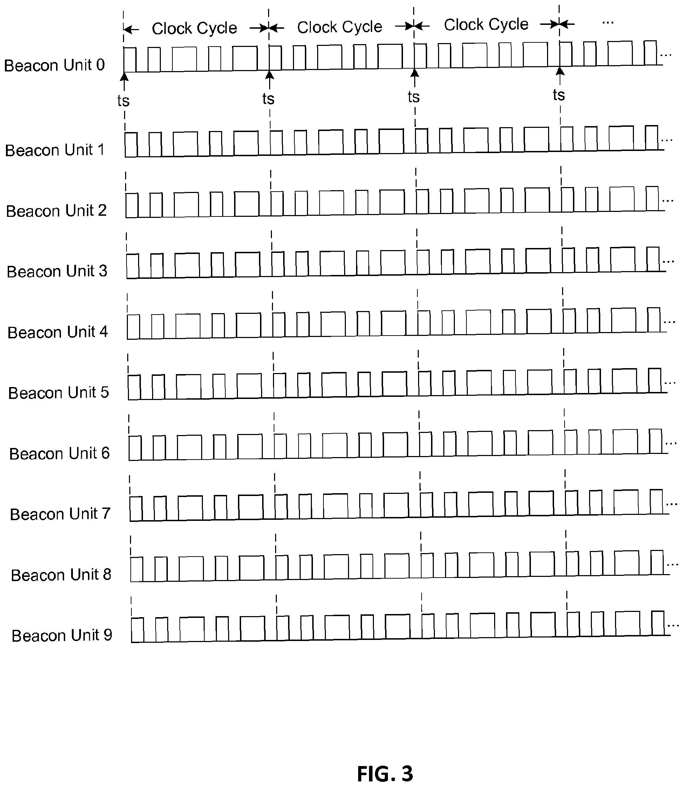

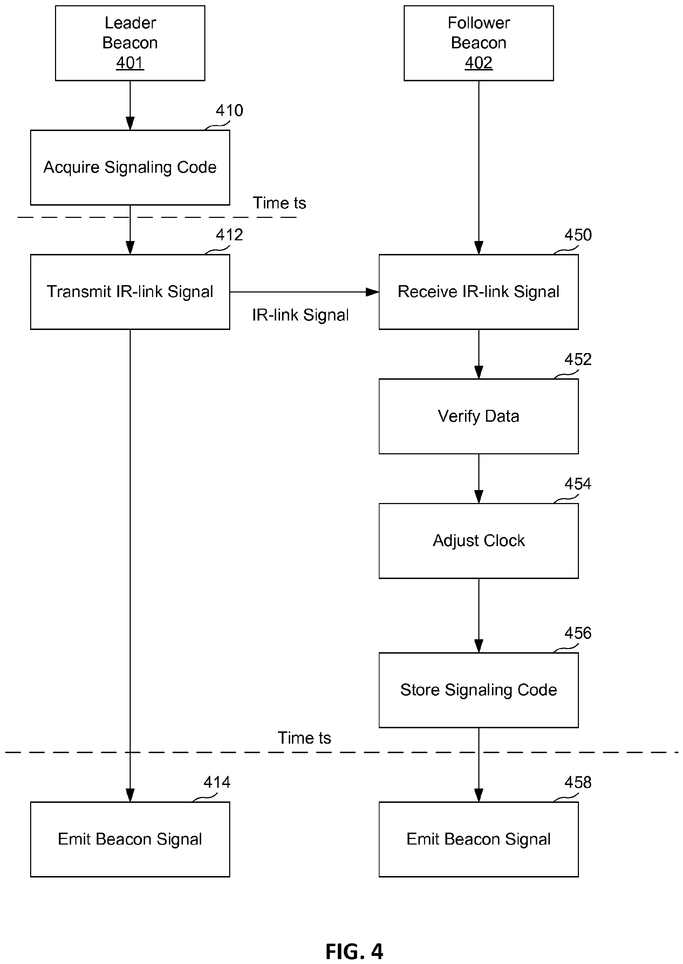

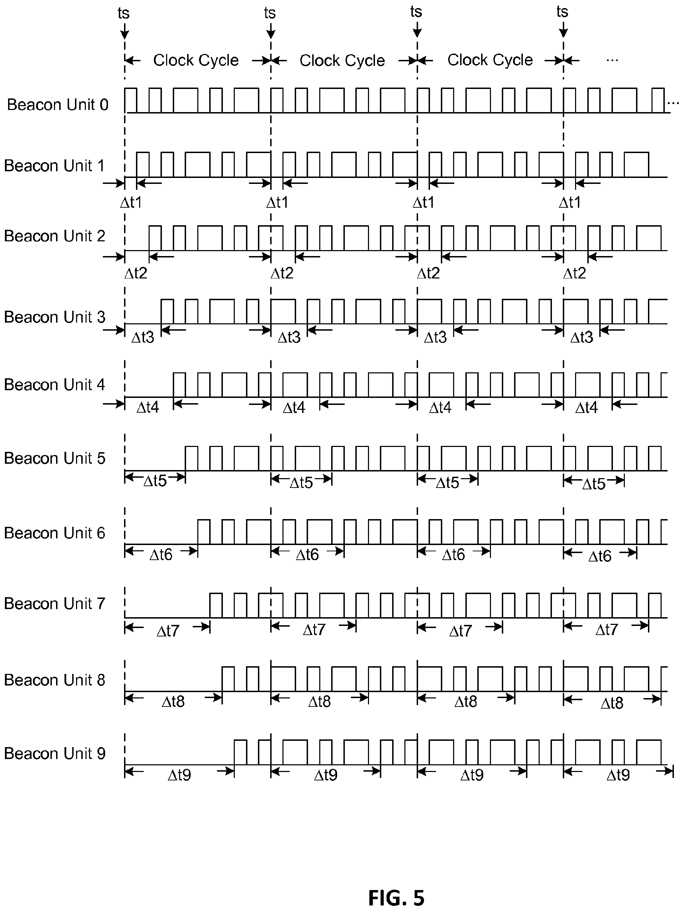

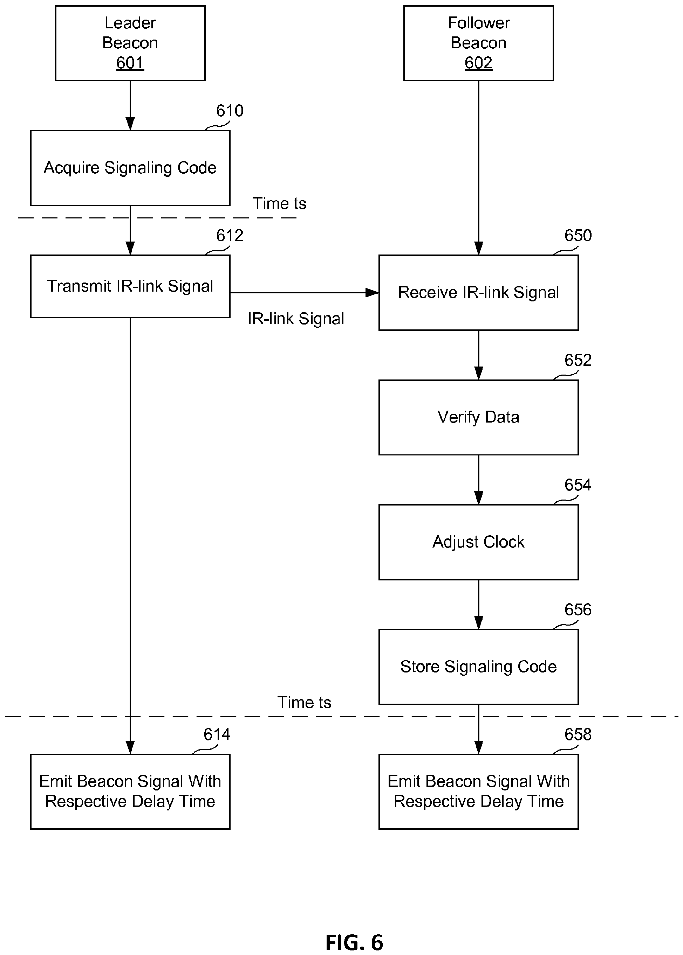

Housing 110 can be made of any solid material for containing a power source such as, for example, an AA battery, of beacon 100. Program button 130 disposed on one side of housing 110 is used for a program operation of beacon 100, which will be explained in more detail with reference to FIGS. 3 and 4. Synchronization button 140 disposed on the opposite side of housing 110 is used for a synchronization and/or cascading operation of beacon 100, which will be explained in more detail with reference to FIGS. 5 and 6. In some embodiments, when beacon 100 is configured as a cascade beacon, housing 110 includes a label 110a having a beacon unit number of beacon 100. The beacon unit number can be any natural number.

Solid cap 120 includes a first opening 122 disposed on a top side of solid cap 120 and a second opening 124 disposed on a front side of solid cap 120. When solid cap 120 is disposed on the top of housing 110, solid cap 120 is in close contact with an upper edge 110b of housing 110, such that beacon signals emitted from IR emitter LEDs 170 can only pass through first and second openings 122 and 124 with a reduced intensity. However, IR signals emitted from an external IR emitter, such as a beacon signal emitted from an IR emitter LED of another beacon, or an IR-link signal emitted from an IR emitter of another beacon, cannot pass through first and second openings 122 and 124. Therefore, an IR-link detector disposed inside solid cap 120 can be protected by solid cap 120 from interference by unintended IR signals.

In some embodiments, rotary switch 150 can be a two-position rotary switch that includes an "on" position and an "off" position. Rotary switch 150 is formed with protrusions 150a on opposite sides. The positions of protrusions 150a can be easily recognized by an operator, such that the operator can rotate rotary switch 150 to the "on" position or the "off" position without visual verification. Once rotary switch 150 is rotated to the "on" position, components of beacon 100 are connected to be supplied with electric power from the power source contained in housing 110 to turn on beacon 100. Once rotary switch 150 is rotated to the "off" position, the electric power is disconnected from the components of beacon 200.

In some embodiments, rotary switch 150 can be a three-position switch that includes a third position in addition to the "on" position" and the "off" position. The third position can be a spring loaded momentary position past the "on" position. Once rotary switch 150 is in the "on" position, rotary switch 150 can be further rotated from the "on" position, in a direction opposite to the "off" position, to the third position by a rotational force applied by an operator. However, if the rotational force is withdrawn by the operator, rotary switch 150 will rotate back to the "on" position by force of a spring (not shown) connected to rotary switch 150. The third position can be used for initiating various control functions such as, for example, a program control, a synchronization control, a power adjustment control, etc.

IR emitter LEDs 170 can be controlled by a microcontroller (not shown) included on control circuit 190 to emit a beacon signal in the infrared spectrum. The beacon signal can be configured to flash on and off according to a predetermined sequence or pattern that makes up a signaling code.

Indicator LEDs 180 can be controlled by the microcontroller to emit a light signal in the visible light spectrum. Indicator LEDs 180 can be color coded such as, for example, red, green, and yellow. Indicator LEDs 180 can be configured to demonstrate a signaling code of the beacon signal to an operator, indicate whether a factory-installed signaling code or an operator-entered signaling code has been selected, indicate when beacon 100 cannot store additional signaling codes, or indicate that beacon 100 is turned on.

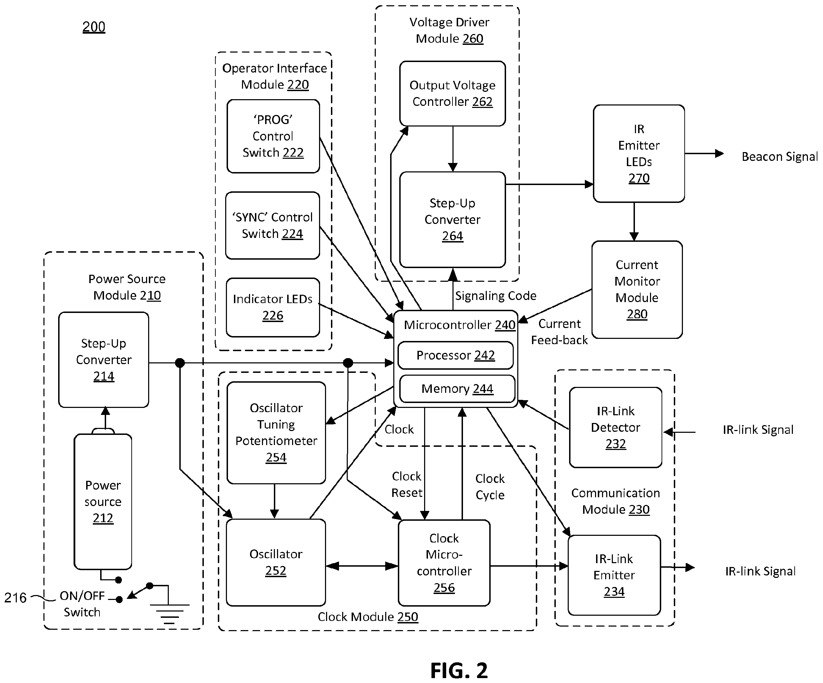

Control circuit 190 can be formed with various electronic components for controlling the operation of beacon 100. The various electronic components can include a power management module including a step-up converter, a communication module including an IR-link detector and an IR-link emitter, the microcontroller mentioned above, a clock module, a voltage driver module, and a current monitor module, which will be explained in more detailed with reference to FIG. 2.

One skilled in the art will now appreciate that beacon 100 can be implemented in a number of different configurations without departing from the scope of the present disclosure. For example, in one embodiment, transparent cap 160 in which IR emitter LEDs 170, indicator LEDs 180, and control circuit 190 are disposed, can be disposed on a side of housing 110 instead of on the end of housing 110 as illustrated in FIG. 1. In addition, beacon 100 can include any number of IR emitter LEDs 170 and any number of indicator LEDs 180.

FIG. 2 is a block diagram of an IR beacon 200 (hereinafter referred to "beacon 200") according to an illustrated embodiment. Beacon 200 can correspond to beacon 100 illustrated in FIG. 1. In the embodiment shown in FIG. 2, beacon 200 includes a power source module 210, an operator interface module 220, a communication module 230, a microcontroller 240, a clock module 250, a voltage driver module 260, one or more IR emitter light emitting diodes (LEDs) 270, and a current monitor module 280.

Power source module 210 includes a power source 212, a step-up converter 214, and an on/off switch 216. Power source 212 supplies an output voltage used to power the other components of beacon 200. Power source 212 can be any power source having an output voltage, such as, for example, a single AA battery having an output voltage of 1.1-1.5 Volts (as illustrated in FIG. 2), or a CR123 battery having an output voltage of 3 Volts. Step-up converter 214 can be any device that steps up the voltage supplied by power source 212 to a voltage level sufficiently high to power some of the other components of beacon 200, such as microcontroller 240 and clock module 250. On/off switch 216 can be any device that allows an operator to turn beacon 200 on and off, such as a pushbutton switch or a rotary switch (e.g., rotary switch 150 of FIG. 1A). Once switched to an "on" position, on/off switch 216 completes an electronic circuit including power source 212, which allows components of beacon 200 to be powered by power source 212. Control methods consistent with the present disclosure can be invoked each time program on/off switch 216 is switched to the "on" position. In addition, once on/off switch 216 is switched to the "on" position, an operator can interact with operator interface module 220.

Operator interface module 220 includes a program ("PROG") control switch 222, a synchronization ("SYNC") control switch 224, and one or more indicator LEDs 226, and allows an operator to interact with beacon 200 to perform various functions. Program control switch 222 and synchronization control switch 224 can be any type of switch, such as a pushbutton switch that is electrically connected to microcontroller 240 such that microcontroller 240 senses when program control switch 222 or synchronization control switch 224 are operated. For example, program control switch 222 can be implemented as program button 130 of FIG. 1A, and synchronization control switch 224 can be implemented as synchronization button 140 of FIG. 1A. Program control switch 222 is used to select one or more factory-installed signaling codes stored in beacon 200 and to record new signaling codes. A new signaling code can be recorded by, for example, an operator repeatedly operating program control switch 222 during a desired time interval to create a pattern according to which IR emitter LEDs 270 flash. Synchronization control switch 224 is used when beacon 200 is operating as a synchronizable beacon (hereinafter referred to as "synchro beacon"), the operation of which will be described in more detail with reference to FIGS. 3 and 4, or a cascade beacon, the operation of which will be described in more detail with reference to FIGS. 5 and 6. Indicator LEDs 226 can be any type of color coded (e.g., red, green, and yellow) LEDs, and can demonstrate a signaling code to an operator, can indicate whether a factory-installed signaling code or an operator-entered signaling code has been selected, can indicate when beacon 200 cannot hold additional signaling codes, or can indicate that beacon 200 is turned on and operating. For example, indicator LEDs 226 can be implemented as the three indicator LEDs 180 of FIG. 1B. In some embodiments, operator interface module 220 can further include a sensory button, e.g., one of program control switch 222 and synchronization control switch 224 can be configured as a sensory button. The sensory button can provide to the user a sensation, e.g., vibration, indicating that .beacon 200 is turned on and operating.

Communication module 230 includes an IR-link detector 232 and an IR-link emitter 234, and is used for communicating data carried by IR-link signals with one or more external devices such as, for example, another beacon or a calibration device. IR-link detector 232 can be any type of IR receiver, and is configured to receive an IR-link signal having a predetermined frequency (e.g., 37 KHz) transmitted from an external device, and send the received IR-link data carried by the IR-link signal to microcontroller 240. IR-link emitter 234 can be any type of IR transmitter, and is configured to frequency-modulate a signal by using a modulation signal having the predetermined frequency, and transmit the frequency-modulated signal as an IR-link signal to an external device. The modulation signal can be produced by clock module 250. In some embodiments, the IR-link signal emitted by IR-link emitter 234 is orthogonal to the beacon signal emitted by IR emitter LEDs 270, and has a relatively long wavelength and relatively low power compared to the beacon signal. Therefore the IR-link signal does not noticeably interfere with the beacon signal.

Microcontroller 240 can be any device that ties together and drives the other elements of exemplary beacon 200. Microcontroller 240 includes a processor 242 and a memory 244. Processor 242 can be one or more processing devices, such as a central processing unit (CPU), which executes program instructions to perform various functions, such as the processes described in more detail below with respect to FIGS. 4, 6, and 7. Memory 244 can be one or more storage devices that maintain data (e.g., instructions, software applications, information used by and/or generated during execution of instructions or software applications, etc.) used by processor 242. For example, memory 244 can store one or more factory-installed signaling codes or operator-entered signaling codes. Memory 244 can also store a factory-installed delay time when beacon 200 functions as a cascade beacon. Further, memory 244 can store one or more computer programs that, when executed by processor 242, perform one or more processes consistent with the present disclosure. Memory 244 can also store information used by and/or generated during execution, by processor 242, of programs that perform the one or more processes consistent with the present disclosure. Memory 244 can include any kind of storage devices that maintains data. For example, memory 244 can include one or more of ROM, RAM, flash memory, or the like.

Clock module 250 includes an oscillator 252, an oscillator tuning potentiometer 254, and a clock microcontroller 256. Oscillator 252 is configured to generate an oscillating signal with a precise frequency, and supply the oscillating signal to microcontroller 240 and clock microcontroller 256. Oscillator tuning potentiometer 254 is controlled by microcontroller 240 to provide an output voltage to oscillator 252 for adjusting the frequency of the oscillating signal generated by oscillator 252.

Clock microcontroller 256 is configured to generate a clock cycle signal based on the oscillating signal supplied from oscillator 252, and supply the clock cycle signal to microcontroller 240. The clock cycle signal has a fixed clock cycle period, and is used for the timing of the signals to be transmitted from beacon 200, e.g., the beacon signals to be emitted by IR emitter LEDs 270, or the IR-link signals to be emitted by IR-link emitter 234. For example, microcontroller 240 can be configured to transmit signals to IR emitter LEDs 270 or IR-link emitter 234 at a starting time of every clock cycle period indicated by the clock cycle signal. In order to generate the clock cycle signal, clock microcontroller 256 can include a first frequency divider for dividing the frequency of the oscillating signal. For example, if the frequency of the oscillating signal generated by oscillator 252 is 16.32 MHz, then, in order to generate a clock cycle signal with a clock cycle period of 9.9 seconds, the first frequency divider is configured to divide the frequency of the oscillating signal by 161,568,000:1.

Clock microcontroller 256 is also configured to generate a modulation signal with a fixed frequency, and transmits the modulation signal to IR-link emitter 234 for frequency modulation. Clock microcontroller 256 can include a second frequency divider for generating the modulation signal. For example, if the frequency of the oscillating signal generated by oscillator 252 is 16.32 MHz, then, in order to generate a modulation signal with a frequency of 37 KHZ, the second frequency divider is configured to divide the frequency of the oscillating signal by 441:1.

Clock microcontroller 256 is further configured to, in response to a clock reset command received from microcontroller 240, wait for a predetermined period of time and restart the clock cycle period of the clock cycle signal from 0.

Voltage driver module 260 can be any device or combination of devices that can supply a variable voltage to drive IR emitter LEDs 270. Voltage driver module 260 includes an output voltage controller 262 and a step-up converter 264. Output voltage controller 262 receives a command from microcontroller 240 and transmits an output voltage control command to step-up converter 264. Step-up converter 264 receives an input voltage from power source module 210 and the output voltage control command from output voltage controller 262, and converts the input voltage to a voltage level to drive IR emitter LEDs 270 according to the output voltage control command.

IR emitter LEDs 270 can be one or more IR LEDs that emit a beacon signal at a selected or range of frequencies and which can be driven to flash on and off according to a predetermined sequence or pattern that makes up a signaling code. IR emitter LEDs 270 are driven by a voltage supplied from step-up converter 264, and can draw a current that can be monitored by current monitor module 280.

Current monitor module 280 can include any device or combination of devices that monitors the current through IR emitter LEDs 270. Because the current through infrared emitter LEDs 270 cannot be measured directly, current monitor module 280 converts the current flowing through IR emitter LEDs 270 to a current feed-back signal using well-known techniques. This current feed-back signal is sent to microcontroller 240 for power management of beacon 200.

When beacon 100 or 200 is manufactured, the beacon can be configured as a synchro beacon or a cascade beacon. A more detailed description of the synchro beacon will be provided with reference to FIGS. 3 and 4. A more detailed description of the cascade beacon will be provided with reference to FIGS. 5 and 6.

A synchro beacon is capable of being synchronized with a "leader" beacon such that, after synchronization, a set of synchro beacons can emit synchronized beacon signals, i.e., beacon signals with the same signaling code in unison.

FIG. 3 schematically illustrates beacon signals emitted by an exemplary set of synchro beacons, according to an illustrated embodiment. According to FIG. 3, the set of synchro beacons consists of ten beacon units, numbered from 0 through 9. Each beacon unit emits a beacon signal at a starting time ts of a clock cycle. Each beacon signal includes an identical signaling code. The respective internal clocks of the set of synchro beacons are synchronized with each other. Therefore, the clock cycles of the synchro beacons are synchronized with each other, with the same starting time ts for each clock cycle. Consequently, the set of synchro beacons emit the same beacon signals at the same clock cycles with the same starting time ts. In such manner, when viewed from short distances, the beacon signals emitted by the set of synchro beacons can be seen as multiple points of light, all of which are flashing in unison and appearing clearly as one group. At longer distances, the individual beacons of the set of synchro beacons blend into a single and much stronger signal than would be seen from just one beacon.

Deploying a set of synchro beacons requires that at setup, one synchro beacon is selected as a leader beacon and then its signaling code and clock synchronization information are communicated to all the other beacons (hereinafter referred to as follower beacons) of the set of synchro beacons. Any follower beacon, once synchronized to the leader beacon, can be then used to synchronize any additional beacons. There is a very small timing error introduced by every synchronization transfer. However, the timing error is small enough that multiple promulgations of synchronization can be performed without compromising the integrity of the beacon signals emitted by the set of synchro beacons.

FIG. 4 is a flow chart showing a process of controlling a leader beacon 401 and a follower beacon 402 in a set of synchro beacons, according to an illustrated embodiment. Leader beacon 401 and follower beacon 402 can be controlled by their respective microcontrollers (e.g., microcontroller 240 of FIG. 2).

Referring to FIG. 4, first, leader beacon 401 acquires a signaling code of beacon signals to be emitted in unison by both of leader beacon 401 and follower beacon 402 (step 410). In particular, the microcontroller of leader beacon 401 can acquire the signaling code from a memory (e.g., memory 244 of FIG. 2). For example, the operator of leader beacon 401 can operate a program control switch (e.g., program control switch 222 of FIG. 2) of the leader beacon to select a signaling code from the memory (e.g., memory 244 of FIG. 2), and then the microcontroller can acquire the selected signaling code from the memory. As another example, the operator can operate the program control switch to record a new signaling code into the memory, and then the microcontroller can acquire the new signaling code from the memory.

When the operator of leader beacon 401 operates a synchronization control switch (e.g., synchronization control switch 224 of FIG. 2) of leader beacon 401, leader beacon 401 transmits an IR-link data packet to follower beacon 402 via an IR-link emitter (e.g., IR-link emitter 234 of FIG. 2) at a starting time of a next clock cycle (step 412). The IR-link data packet consists of a first data block including an identifier of leader beacon 401, a second data block including the signaling code acquired in step 410, a third data block including an instruction code for follower beacon 402, and a fourth data block including a verification code. The instruction code can instruct follower beacon 402 to synchronize the clock, and emit a beacon signal. The verification code can be a check sum value of the data included in the IR-link data packet. Each of the first through fourth data blocks has a fixed length which is known by follower beacon 402.

Step 412 is triggered by the operator of leader beacon 401 operating the synchronization control switch of leader beacon 401. Specifically, when the microcontroller of leader beacon 401 detects that the synchronization control switch of leader beacon 401 is operated, the microcontroller waits for the starting time ts of the next clock cycle immediately following the current clock cycle, and transmits the IR-link data packet to the IR-link emitter at the starting time ts of the next clock cycle. The IR-link emitter modulates the IR-link data packet by a modulation signal to generate an IR-link signal, and then emits the IR-link signal. Because the IR-link signal is emitted at about the starting time ts of the next clock cycle, the IR-link signal inherently includes clock synchronization information of leader beacon 401. In some embodiment, before the microcontroller transmits the IR-link data packet to the IR-link emitter, the microcontroller also encrypts the IR-link data packet using a special encryption method known by follower beacon 402.

In order to successfully transmit the IR-link signal, the operator of leader beacon 401 can orient and point the IR-link emitter of leader beacon 401 towards follower beacon 402, and an operator of follower beacon 402 can orient and point an IR-link detector (e.g., IR-link detector 232) of follower beacon 402 towards leader beacon 401.

Then, when the clock of leader beacon 401 indicates that it is the starting time ts of a clock cycle immediately following the clock cycle where leader beacon 401 transmits the IR-link data packet, leader beacon 401 immediately starts emitting a beacon signal in successive clock cycles, starting from the starting time ts (step 414). Specifically, the microcontroller of leader beacon 401 transmits the signaling code to a voltage driver module (e.g., voltage driver module 260 of FIG. 2) of leader beacon 401. The voltage driver module then drives IR emitter LEDs (e.g., IR emitter LEDS 270 of FIG. 2) of leader beacon 401 according to the signaling code. As a result, the IR emitter LEDs of leader beacon 401 transmit the beacon signal in successive signaling cycles.

Meanwhile, follower beacon 402 receives the IR-link signal transmitted from leader beacon 401 (step 450). Specifically, when an IR-link detector (e.g., IR-link detector 232 of FIG. 2) of follower beacon 402 detects the IR-link signal from leader beacon 401, the IR-link detector demodulates the IR-link signal using a modulation signal with an identical frequency as the modulation signal used by the IR-link emitter of leader beacon 401 for frequency modulating the IR-link data packet, to recover the IR-link data packet, and then transmits IR-link data packet to the microcontroller of follower beacon 402.

Then, follower beacon 402 verifies the data included in the IR-link signal received from leader beacon 401 (step 452). Specifically, a memory (e.g., memory 244 of FIG. 2) of follower beacon 402 is configured to store information regarding the length of the IR-link data packet, as well as information regarding the length of each of first through fourth data blocks included the IR-link data packet. Based on the stored information, the microcontroller of follower beacon 402 parses the received IR-link data packet to extract the identifier, signaling code, instruction code, and verification code, and verifies the identifier and mathematical integrity of the data. For example, the microcontroller checks whether the extracted identifier matches one or more identifiers of authorized beacon units pre-stored in the memory of follower beacon 402. As another example, if the verification code is a check sum value of the data included in the IR-link data packet, the microcontroller calculates a check sum value of the data included in the received IR-link data packet, and then checks whether the check sum value resulting from the calculation matches the check sum value included in the received IR-link data packet.

Assuming the data included in the IR-link signal is verified, the microcontroller of follower beacon 402 immediately changes the operation of follower beacon 402 as instructed by the data received from leader beacon 401.

In particular, follower beacon 402 adjusts a clock (e.g., clock module 250 of FIG. 2) of follower beacon 402 to be synchronized with the clock of leader beacon 401 (step 454). Specifically, the microcontroller of follower beacon 402 transmits a clock reset command to a clock microcontroller (e.g., clock microcontroller 256 of FIG. 2) immediately after the data is verified at step 452. As described previously, the IR-link signal is transmitted from leader beacon 401 at approximately the starting time of a clock cycle of leader beacon 401. It takes a certain amount of time for the IR-link signal to travel to follower beacon 402, and for follower beacon 402 to process the IR-link signal and verify the data included in the IR-link signal. Therefore, when the clock microcontroller receives the clock reset command from the microcontroller, it is already the certain amount of time after the starting time of the clock cycle of leader beacon 401. Therefore, in order to synchronize the clock of follower beacon with the clock of leader beacon 401, the clock microcontroller waits for a predetermined period of time and then restarts its clock cycle period of from 0. The predetermined period of time is used for compensating the time necessary for follower beacon 402 to receive and process the IR-link data packet. The predetermined period of time can be determined as the clock cycle period minus a first amount of time for transmission of the IR-link signal from leader beacon 401 to follower beacon 402, and a second time interval for processing and verifying data included in the IR-link signal at follower beacon 402. For example, if the clock cycle period is 9.9 seconds, and it takes 1 second to transmit the IR-link signal from leader beacon 401 to follower beacon 402, and 0.1 second to process and verify data included in the IR-link signal, then the clock microcontroller will wait for 8.8 second after receiving the clock reset command to restart the clock cycle from 0. After clock synchronization, the clock cycle signal generated by the clock of follower beacon 402 should have the same clock cycle as that of the leader beacon 401.

Follower beacon 402 also stores the signaling code included in the received IR-link data packet into the memory of follower beacon 402 (step 456). Successful receipt of the signaling data and the clock synchronization data and changing the operation of follower beacon 402 can be indicated to the operator of follower beacon 402 by a "Victory" flashing pattern emitted by indicator LEDs (e.g., indicator LEDs 226 of FIG. 2) of follower beacon 402. Should the transmission not be successful, a "Wave-off" flashing pattern will be shown by the indicator LEDs.

When the clock of follower beacon 402 indicates that it is the starting time ts of a clock cycle, follower beacon 402 immediately starts emitting a beacon signal in successive clock cycles, starting from the starting time ts (step 458). Specifically, the microcontroller of follower beacon 402 transmits the signaling code and a clock cycle signal generated by the clock of follower beacon 402 to a voltage driver module (e.g., voltage driver module 260 of FIG. 2) of follower beacon 402. The voltage driver module then drives IR emitter LEDs (e.g., IR emitter LEDS 270 of FIG. 2) of follower beacon 402 according to the signaling code and the clock cycle signal. As a result, the IR emitter LEDs of follower beacon 402 transmits the beacon signal in successive clock cycles. The beacon signal emitted by follower beacon 402 is the same as and is synchronized with the beacon signal transmitted by leader beacon 401.

Leader beacon 401 and follower beacon 402 can continue to emit beacon signals in unison independently for approximately 24 hours or until power is interrupted. After synchronization, there is no need for any further communication between leader beacon 401 and follower beacon 402.

In the embodiment illustrated in FIG. 4, there is only one follower beacon. However those of ordinary skill in the art will now recognize that more than one follower beacon can be included in the set of synchro beacons. The set of synchro beacons can be deployed completely independent from each other, emitting beacon signals with the same signaling code, regardless of terrain or separation distance. In addition, any follower beacon that has been synchronized with the leader beacon can function as a leader beacon to synchronize other beacons, by the operator of the follower beacon operating a synchronization control switch on the follower beacon. Therefore, should any beacon lose synchronization for one reason or another, the beacon can be re-synchronized at any time from any of the beacon of the group and thereby rejoin the group in synchronism.

As described above, when a beacon is manufactured in a factory, the beacon can be configured as a synchro beacon or a cascade beacon. A cascade beacon is capable of delaying emission of its beacon signal from the starting time of each clock cycle by a fixed delay time, such that a set of cascade beacons can emit cascading beacon signals with an identical signaling code but delayed from each other. In such manner, the set of cascade beacons create a pattern of a moving light pulse. To create this effect, the set of cascade beacons emit the same beacon signal, but delayed by a time interval relative to the beacon signals emitted from their respective adjacent beacons. The delay time of a cascade beacon can be pre-stored in an internal memory and can be indicated on a label (e.g., label 110a of FIG. 1) by a beacon unit number. The cascade beacons are built using the same hardware and operate essentially the same way as the synchro beacons, with the only difference being the firmware that is loaded into the microcontrollers.

FIG. 5 schematically illustrates beacon signals emitted by an exemplary set of cascade beacons, according to an illustrated embodiment. According to FIG. 5, the set of cascade beacons consists of ten beacon units, numbered from 0 through 9. The internal clocks of the set of cascade beacons are synchronized with each other. Therefore, the clock cycles of the synchro beacons are synchronized with each other, with the same starting time ts for each clock cycle. Each one of beacon units 1 through 9 emits a beacon signal with a respective delay time, i.e., Δt1 though Δt9, relative to the starting time ts of each clock cycle. The respective delay time can be pre-stored in a memory (i.e., memory 244 of FIG. 2) of each cascade beacon, and can be indicated by a beacon unit number written on a label. The beacon unit number denotes the number of units of delay a beacon has. For example, a beacon unit N (N being one of 1 through 9) has a delay time of N×Δt1 relative to beacon unit 0, i.e., Δt_{N}= N × Δt1.

Any beacon in the set of cascade beacons can act as a leader. However, just as with the synchro beacons, all cascade beacons must be synchronized to each other. Once synchronized, then when the beacons are arranged sequentially according to the unit numbers and spaced along a line or circle with more or less the same separation, the effect of a moving light pulse will be created.

FIG. 6 is a flow chart showing a process of controlling a leader beacon 601 and a follower beacon 602 in a set of cascade beacons, according to an illustrated embodiment. The control of leader beacon 601 and follower beacon 602 can be performed by their respective microcontrollers (e.g., microcontroller 240 of FIG. 2).

Leader beacon 601 and follower beacon 602 can be any one of beacon units 0 through 9 illustrated in FIG. 6. For example below, leader beacon 601 is beacon unit 1, and follower beacon 602 is beacon unit 2. Thus, before the process of FIG. 6 starts, a delay time of Δt1 is stored in a memory of leader beacon 601, and a delay time of Δt2 is stored in a memory of follower beacon 602.

First, leader beacon 601 acquires a signaling code of beacon signals to be emitted by both of leader beacon 601 and follower beacon 602 (step 610). The manner of performing step 610 is similar to that of step 410. Therefore, detailed description of step 610 is not repeated.

When the operator of leader beacon 601 operates a synchronization control switch (e.g., synchronization control switch 224 of FIG. 2) of leader beacon 601, leader beacon 601 transmits an IR-link signal including an IR-link data packet to follower beacon 602 via an IR-link emitter (e.g., IR-link emitter 234 of FIG. 2) at a starting time of a next clock cycle (step 612). The manner of performing step 612 is similar to that of step 412. Therefore, detailed description of step 612 is not repeated.

Then, when the clock of leader beacon 601 indicates that it is the starting time ts of a clock cycle immediately following the clock cycle where leader beacon 601 transmits the IR-link data packet, leader beacon 601 starts emitting a beacon signal with a delay time relative to the starting time ts of the clock cycle (step 614). The delay time is stored in the memory of leader beacon 601. For example, if leader beacon 601 is beacon unit 1 of FIG. 5, then the microcontroller of leader beacon 601 waits for a delay time period of Δt1 and then controls IR emitter LEDs (e.g., IR emitter LEDs 270 of FIG. 2) of leader beacon 601 to emit a beacon signal including the signaling code acquired at step 610 in successive signaling cycles. As another example, if leader beacon 601 is beacon unit 0 of FIG. 5, then the microcontroller controls the IR emitter LEDs to immediately emit the beacon signal without waiting for any delay time period.

Follower beacon 602 receives the IR-link signal from leader beacon 601 (step 650). Specifically, an IR-link detector of follower beacon 602 detects the IR-link signal from leader beacon 601 and then transmits the IR-link signal to the microcontroller of follower beacon 602.

Then, follower beacon 602 verifies the data included in the IR-link signal received from leader beacon 601 (step 652). The manner of performing step 652 is similar to that of step 452. Therefore, detailed description of step 652 is not repeated.

Assuming the data included in the IR-link signal is verified, the microcontroller of follower beacon 602 immediately changes the operation of follower beacon 602 as directed by the data received from leader beacon 601.

In particular, follower beacon 602 adjusts the clock (e.g., clock module 250 of FIG. 2) of follower beacon 602 to be synchronized with the clock of leader beacon 601 according to the clock synchronization data (step 654). The manner of performing step 654 is similar to that of step 454. Therefore, detailed description of step 654 is not repeated.

In addition, follower beacon 602 stores the signaling code received from leader beacon 601 into the memory of follower beacon 602 (step 656).

When the clock of follower beacon 602 indicates that it is the starting time ts of a clock cycle, follower beacon 602 starts emitting a beacon signal with a delay time relative to the starting time ts of the clock cycle (step 658). The delay time is stored in the memory of follower beacon 602. For example, if follower beacon 602 is beacon unit 2 of FIG. 5, then the microcontroller of follower beacon 602 waits for a delay time period of Δt2 and then controls IR emitter LEDs of follower beacon 602 to emit a beacon signal including the signaling code received from leader beacon 601 in successive signal cycles.

In one embodiment, a set of beacons includes a plurality of subsets of beacons. The beacons in each subset of beacons are synchronized with each other, i.e., can emit synchronized beacon signals. The beacon signals emitted by each subset of beacons are cascaded with the beacon signals emitted by their neighboring subsets of beacons. In order to realize such a scenario, for example, each subset of beacons include a sub-leader beacon which is a cascade beacon having a delay time, and a plurality of synchro beacons synchronized to the sub-leader beacon.

In both of the synchro beacons and the cascade beacons, the clock cycle signals of the beacons are synchronized with each other. Only when their clock cycle signals are synchronized with each other, can the synchronized effect or the cascading effect of beacon signal transmission be realized. However, the clock cycle signals are generated from the oscillating signals generated by the oscillator (e.g., oscillator 252 of FIG. 2), and the oscillator may be affected by temperature variations, resulting in drifting of the clock cycle signals. Therefore, it may be necessary to recalibrate the oscillators after the beacons are manufactured.

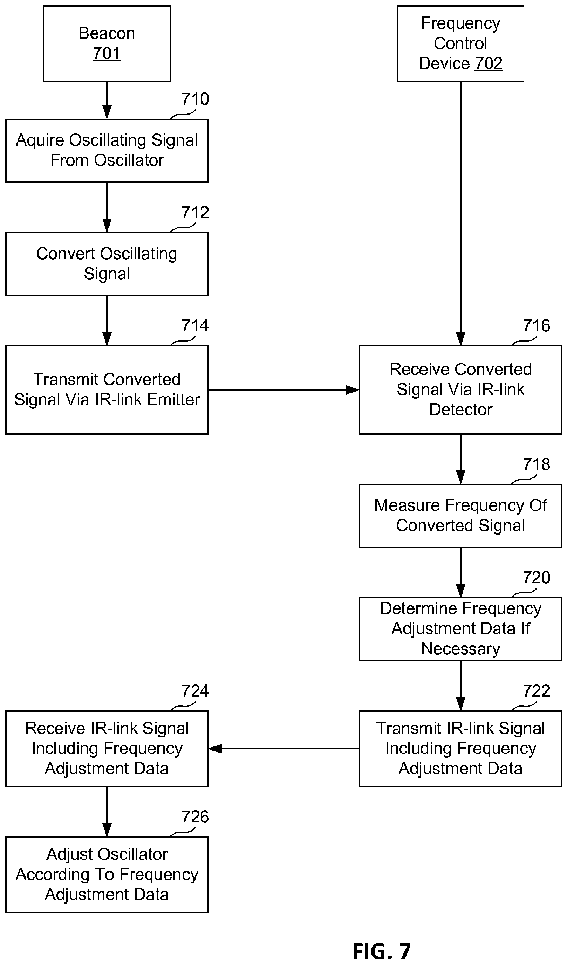

FIG. 7 is a flow chart of a process of calibrating an oscillator in a beacon according to an illustrated embodiment. The process can be applied to a beacon 701 communicating with a calibration device 702, which is external to and separated from beacon 701.

Referring to FIG. 7, first, beacon 701 acquires an oscillating signal generated by an oscillator (step 710). For example, a microcontroller (e.g., microcontroller 240 of FIG. 2) of beacon 701 acquires the oscillating signal from the oscillator (e.g., oscillator 252 of FIG. 2). In one embodiment, the oscillator periodically sends its oscillating signal to the microcontroller . Alternatively, in another embodiment, the microcontroller sends a request for the oscillating signal to the oscillator, and, in response to the request, the oscillator sends its oscillating signal to the microcontroller.

Beacon 701 then converts the oscillating signal to a signal having a frequency which is proportionally lower than the frequency of the oscillating signal (step 712). For example, the microcontroller of beacon 701 includes a digital or analog frequency divider that is configured to generate a signal (hereinafter referred to as the "converted signal") having a frequency that is a fraction of the frequency of the oscillating signal.

Beacon 701 then transmits the converted signal via an IR-link emitter of the beacon (step 714). For example, the clock microcontroller of beacon 701 transmits the converted signal to the IR-link emitter (e.g., IR-link emitter 234 of FIG. 2), which then transmits the converted signal to calibration device 702.

Calibration device 702 receives the converted signal from beacon 701 via an IR-link detector of calibration device 702 (step 716). Calibration device 702 then measures a frequency of the received converted signal (step 718), and determines whether the oscillator of beacon 701 needs to be adjusted. If the oscillator of beacon 701 needs to be adjusted, calibration device 702 determines frequency adjustment data based on the frequency of the received signal (step 720). Next, calibration device 702 transmits an IR-link signal including the frequency adjustment data determined at step 720 to beacon 701 (step 722).

Beacon 701 receives the IR-link signal transmitted from calibration device 702 via an IR-link detector (e.g., IR-link detector 232) of beacon 701 (step 724). For example, the IR-link detector of beacon 701 receives the IR-link signal and transmits the IR-link signal to the microcontroller.

Beacon 701 then adjusts the oscillator according to the frequency adjustment data included in the IR-link signal (step 726). For example, the microcontroller of beacon 701 parses the IR-link signal to obtain the frequency adjustment data, and, according to the frequency adjustment data, controls an oscillator tuning potentiometer (e.g., oscillator tuning potentiometer 254 of FIG. 2) to output a voltage to the oscillator to adjust the frequency of the oscillating signal generated by the oscillator.

In the present embodiment, by converting the oscillating signal and transmitting the converted signal via the IR-link emitter to calibration device 702 for calibration, and adjusting the oscillator based on frequency adjustment data determined by calibration device 702, the oscillator can be tuned without the need of any mechanical or electrical contact.

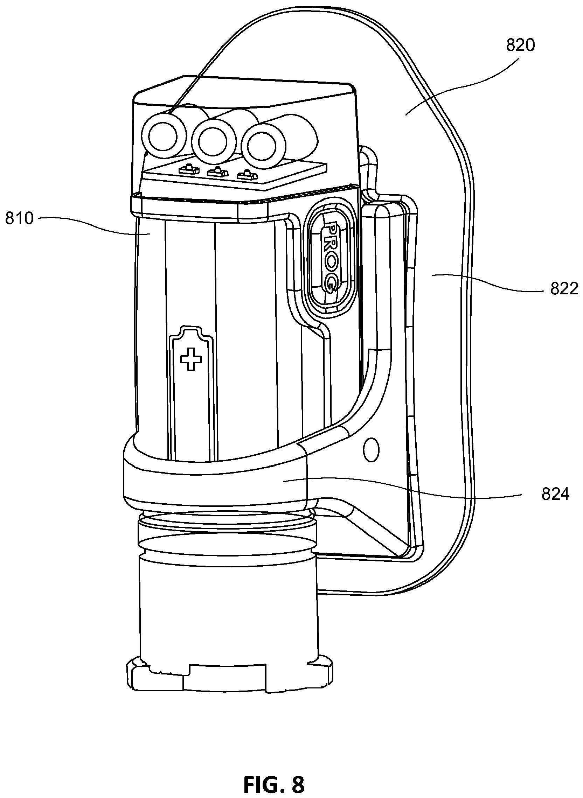

Beacons are generally carried by soldiers and law enforcement personnel. In one embodiment, beacons can be carried on the soldier's helmet. FIG. 8 is a perspective view showing a beacon 810 and a helmet mount 820 for mounting beacon 810 to a soldier's helmet, according to an illustrated embodiment.

As illustrated in FIG. 8, helmet mount 820 includes a contoured body 822 and a holding portion 824 attached to contoured body 822. Contoured body 822 is configured to have a specific shape that can be fitted on the solder's helmet. An inner circumference of holding portion 824 is configured to have nearly the same size as an outer circumference of beacon 810, such that beacon 810 can be inserted and fixed in holding portion 824. When beacon 810 is fixed in holding portion 824, contoured body 822 can be attached to the solder's helmet with an IR emitter of beacon 810 facing upward or facing toward another soldier.

In another embodiment, beacons can be mounted to MOLLE (MOdular Lightweight Load-carrying Equipment) systems. A MOLLE system consists of rows and/or columns of heavy-duty nylon straps interleaved together and attached/stitched to a solider's garment (e.g., vest, jacket, pants) or backpack for mounting various MOLLE compatible accessories.

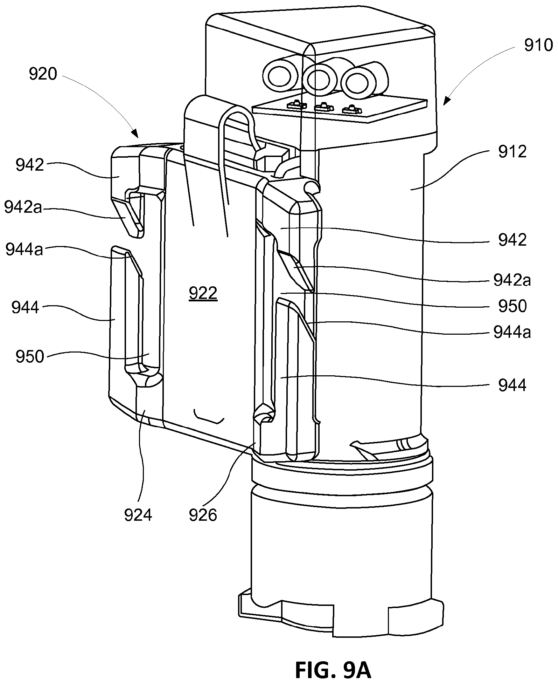

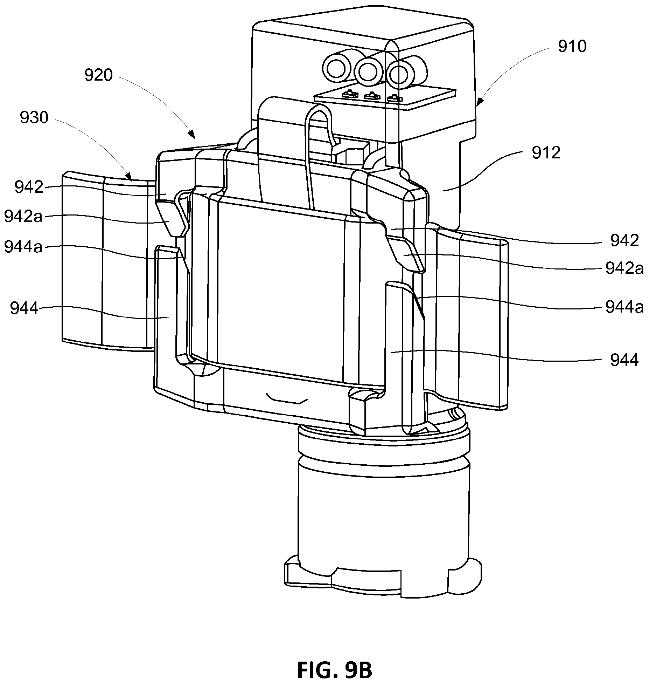

FIG. 9A is a perspective view showing a beacon 910 and an attachment mount 920 for mounting beacon 910 to a MOLLE system carried by a soldier, according to an illustrate embodiment. FIG. 9B is a perspective view of beacon 910 mounted to a strap 930 of the MOLLE system via attachment mount 920.

As illustrated in FIGS. 9A and 9B, attachment mount 920 is formed on a backside of a housing 912 of beacon 910. Attachment mount 920 includes a body 922 and two identical mounting sections 924 and 926 disposed at opposite sides of body 922. Each one of mounting sections 924 and 926 includes a pair of arms 942 and 944 extending toward each other and spaced apart from body 922 to partially surround a space 950 for receiving strap 930. In addition, opposite ends 942a and 944a of arms 942 and 944, respectively, are spaced apart from each other and have inclined surfaces that face each other, in order for strap 930 to be passed therethrough. Moreover, arm 944 is longer than arm 942.

As described above, systems and methods consistent with the present disclosure provide a synchro beacon that can be synchronized with a "leader" beacon and can emit synchronized beacon signals with the "leader" beacon. The systems and methods consistent with the present disclosure also provide a cascade beacon that can emit a cascaded beacon signal with respect to a "leader" beacon.

For purposes of explanation only, certain aspects and embodiments are described herein with reference to the components illustrated in FIGS. 1-9. The functionality of the illustrated components can overlap, however, and can be present in a fewer or greater number of elements and components. Further, all or part of the functionality of the illustrated elements can co-exist on a single integrated circuit chip or be distributed among several integrated circuit chips. Moreover, embodiments, features, aspects, and principles disclosed herein can be implemented in various environments and are not limited to the illustrated environments. For example, while FIGS. 1A, 1B, and 2 have been described with respect to beacons including infrared LEDs 170, the embodiments of FIGS. 1A, 1B, and 2 can alternatively apply to beacons including other emitters, such as thermal LEDs or other devices that emit thermal or infrared signatures.

Further, the sequences of events described in FIGS. 4, 6, and 7 are exemplary and not intended to be limiting. Thus, other process stages can be used, and even with the processes depicted in FIGS. 4, 6, and 7, the particular order of events can vary without departing from the scope of the disclosed embodiments. Moreover, certain process stages can be omitted and additional stages can be implemented in FIGS. 4, 6, and 7. Also, the processes described herein are not inherently related to any particular system or apparatus and can be implemented by any suitable combination of components.

Beacon device 100 disclosed in the embodiment illustrated in FIG. 1 is configured to emit IR beacon signals, and communicate with other beacon devices using IR-link signals. However, the present disclosed is not limited thereto. Each one of the beacon signals and link signals can have various frequencies, outside of the IR range.

The beacon devices described in the embodiments above can be configured to emit beacon signals having predetermined signal programs and frequencies. In addition, a group of beacon devices can be configured to emit synchronized beacon signals or cascading signals. To this end, programming and control of the beacon devices are achieved via beacon-to-beacon communication, or when the beacon devices are physically connected to a servicing facility. According to the following description, programming and control of the beacon devices can also be achieved remotely via wireless communication.

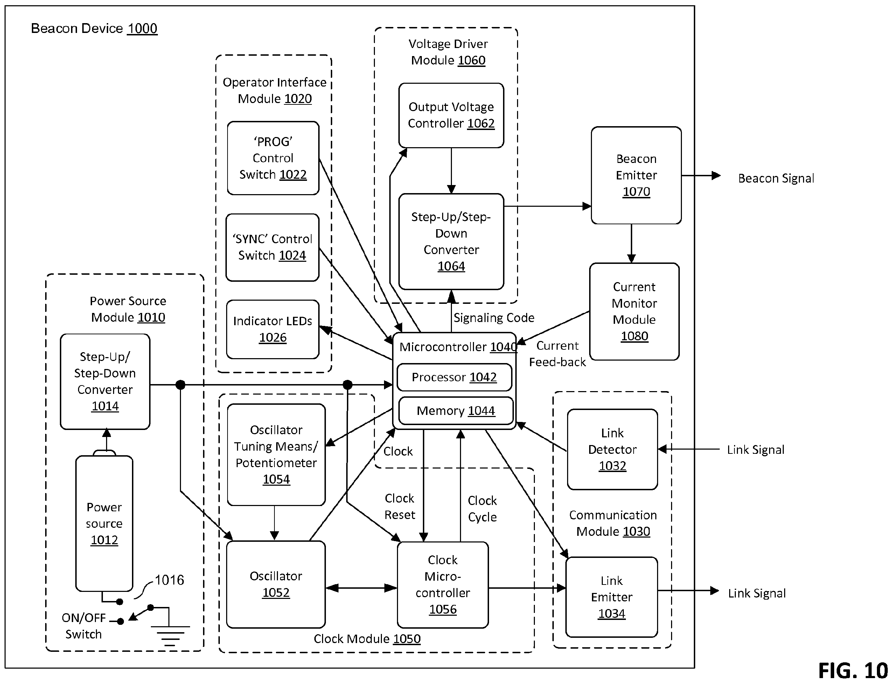

FIG. 10 is a block diagram of a beacon device 1000 according to an illustrated embodiment. In the embodiment shown in FIG. 10, beacon device 1000 includes a power source module 1010, an operator interface module 1020, a communication module 1030, a microcontroller 1040, a clock module 1050, a voltage driver module 1060, a beacon emitter 1070, and a current monitor module 1080.

Power source module 1010 includes a power source 1012, a step-up or step-down converter 1014, and an on/off switch 1016. Power source 1012 supplies an output voltage used to power the other components of beacon device 1000. Power source 1012 can be any power source having an output voltage, such as, for example, a single AA battery having an output voltage of 1.1-1.5 Volts (as illustrated in FIG. 10), or a CR123 battery having an output voltage of 3 Volts. In some embodiments, power source 1012 can include a rechargeable battery that can be charged in a wired or wireless (non-contact) manner. Step-up or step-down converter 1014 can be any device that changes the voltage supplied by power source 1012 to a voltage level necessary to power some of the other components of beacon device 1000, such as microcontroller 1040 and clock module 1050. On/off switch 1016 can be any device that allows an operator to turn beacon device 1000 on and off, such as a pushbutton switch or a rotary switch. In some embodiments, on/off switch 1016 can be remotely controlled by an operator using IR, Bluetooth®, or Wifi® communication. Once switched to an "on" position, on/off switch 1016 completes an electronic circuit including power source 1012, which allows components of beacon device 1000 to be powered by power source 1012. Control methods consistent with the present disclosure can be invoked each time program on/off switch 1016 is switched to the "on" position. In addition, once on/off switch 1016 is switched to the "on" position, an operator can interact with operator interface module 1020.

Operator interface module 1020 includes a program ("PROG") control switch 1022, a synchronization ("SYNC") control switch 1024, and one or more indicator LEDs 1026, and allows an operator to interact with beacon device 1000 to perform various functions. The function and operation of operator interface module 1020 are similar to those described above for operator interface module 220, and thus detailed description of operator interface module 1020 is not repeated.

Communication module 1030 includes a link detector 1032 and a link emitter 1034, and is used for communicating data carried by link signals with one or more external devices such as, for example, another beacon device or a calibration device. The data carried by link signals can be signaling code, synchronization information, etc. The link signals can be configured to have a predetermined modulation frequency for improvement of communication reliability. For example, the link signals can be infrared (IR) signals having a predetermined modulation frequency of, for example, 37 KHz. Alternatively, the link signals can be optical signals having a predetermined wavelength of, for example, 950 nm. Link detector 1032 can be any type of receiver, and is configured to receive the link signal having the predetermined modulation frequency, and send link data carried by the received link signal to microcontroller 1040. Link emitter 1034 can be any type of transmitter, and is configured to frequency-modulate a signal by using a modulation signal having the predetermined frequency, and transmit the frequency-modulated signal as a link signal to an external device. The modulation signal can be produced by clock module 1050. In some embodiments, the link signal emitted by link emitter 1034 is orthogonal to the beacon signal emitted by beacon emitter 1070, and has a relatively longer wavelength and relatively low power compared to the beacon signal. Therefore the link signal does not noticeably interfere with the beacon signal. In some embodiments, communication module 1030 can include link emitters and link detectors for other types of communication, such as Bluetooth®, Wifi®, radio communication, etc. The link emitters and link detectors can be implemented based on radio frequency identification (RFID) technology, ultra-wideband (UWB) technology, Bluetooth® technology, and other technologies. In some embodiments, communication module 1030 can further include an encryption unit for encrypting signals to be emitted by the link emitters, and a decryption unit for decrypting signals received by the link detectors.

Microcontroller 1040 can be any device that ties together and drives the other elements of exemplary beacon device 1000. Microcontroller 1040 includes a processor 1042 and a memory 1044. Processor 1042 can be one or more processing devices, such as a central processing unit (CPU), which executes program instructions to perform various functions. Memory 1044 can be one or more storage devices that maintain data (e.g., instructions, software applications, information used by and/or generated during execution of instructions or software applications, etc.) used by processor 1042. For example, memory 1044 can store one or more factory-installed signaling codes or operator-entered signaling codes. Memory 1044 can also store a factory-installed delay time when beacon device 1000 functions as a cascade beacon. Further, memory 1044 can store one or more computer programs that, when executed by processor 1042, perform one or more processes consistent with the present disclosure. Memory 1044 can also store information used by and/or generated during execution, by processor 1042, of programs that perform the one or more processes consistent with the present disclosure. Memory 1044 can include any kind of storage devices that maintain data. For example, memory 1044 can include one or more of ROM, RAM, flash memory, or the like. In some embodiments, microcontroller 1040 can be controlled by an external controller (e.g., smart phone, tablet computer, personal computer) via a wired or wireless network based on a communication standard, such as Bluetooth®, Wifi®, 2G, 3G, or 4G, or a combination thereof. For example, a user of the external controller can operate the external controller to configure or enter information such as signaling code, delay time, etc., for storage, in memory 1044 under control of processor 1042. In some embodiments, the operation of microcontroller 1040 can be verified by the external controller with the wireless network. In some embodiments, microcontroller 1040 can be configured to change the signaling code or the frequency of the beacon signal over time, such that the beacon signal is more complex and difficult to detect and/or duplicate.

Clock module 1050 includes an oscillator 1052, an oscillator tuning means such as a potentiometer 1054, and a clock microcontroller 1056. The function and operation of clock module 1050 are similar to those described above for clock module 250, and therefore detailed description of clock module 1050 is not repeated.

Voltage driver module 1060 can be any device or combination of devices that can supply a variable voltage to drive beacon emitter 1070. Voltage driver module 1060 includes an output voltage controller 1062 and a step-up or step-down converter 1064. Output voltage controller 1062 receives a command from microcontroller 1040 and transmits an output voltage control command to step-up or step-down converter 1064. Step-up converter or step-down 1064 receives an input voltage from power source module 1010 and the output voltage control command from output voltage controller 1062, and converts the input voltage to a voltage level to drive beacon emitter 1070 according to the output voltage control command.

Beacon emitter 1070 can include one or more light emitting diodes (LEDs) that emit a beacon signal at a selected or range of frequencies and which can be driven to flash on and off according to a predetermined sequence or pattern that makes up a signaling code. Beacon emitter 1070 is driven by a voltage supplied from step-up or step-down converter 1064, and can draw a current that can be monitored by current monitor module 1080.

Current monitor module 1080 can include any device or combination of devices that monitors the current through beacon emitter 1070. Because the current through beacon emitter 1070 cannot be measured directly, current monitor module 1080 converts the current flowing through beacon emitter 1070 to a current feed-back signal using well-known techniques. This current feed-back signal is sent to microcontroller 1040 for power management of beacon device 1000.

According to the embodiments of the disclosure, Internet communication or another other type of wireless communication is utilized to enable control of all functions of beacon devices at any distance with the use of any type of devices that are capable of connection to the Internet or other types of wireless networks, such as a smart phone, personal computers, or by an intelligent software program running on a system without need for human intervention. One approach for achieving this capability is the application of a relay device to bridge communications between the Internet or other types of wireless networks and the beacon devices that are to be controlled.

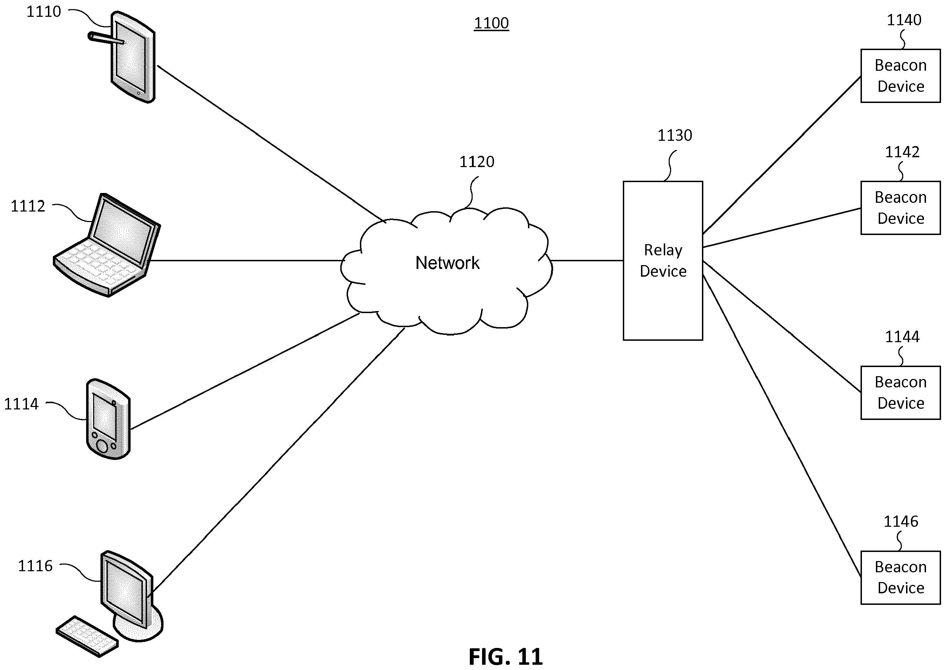

FIG. 11 schematically illustrates a beacon communication system 1100 according to such embodiment. As shown in FIG. 11, system 1100 includes a plurality of beacon controllers 1110, 1112, 1114, and 1116, a network 1120, a relay device 1130, and a plurality of beacon devices 1140, 1142, 1144, and 1146.

Beacon controllers 1110, 1112, 1114, and 1116 can be any type of devices that are capable of connection to network 1120. For example, beacon controllers 1110, 1112, 1114, and 1116 can include a tablet computer 1110, a laptop computer 1112, a smart phone 1114, or a personal computer 1116. Beacon controllers 1110, 1112, 1114, and 1116 can receive various control commands from a user, and transmit the control commands to relay device 1130 via network 1120. Alternatively, beacon controllers 1110, 1112, 1114, and 1116 can automatically generate various control commands by an intelligent software program installed on the controllers, and transmit the control commands to relay device 1130 via network 1120. Beacon controllers 1110, 1112, 1114, and 1116 can also receive various update information from beacon devices 1140, 1142, 1144, and 1146 via network 1120, and generates control commands based on the update information.

Network 1120 can be any type of network that facilitates communication between remote components, such as beacon controllers 1110, 1112, 1114, and 1116 and relay device 1130. For example, network 1120 can be a local area network (LAN), a wide area network (WAN), a virtual private network, a dedicated intranet, the Internet, a cellular network, and/or a wireless network.

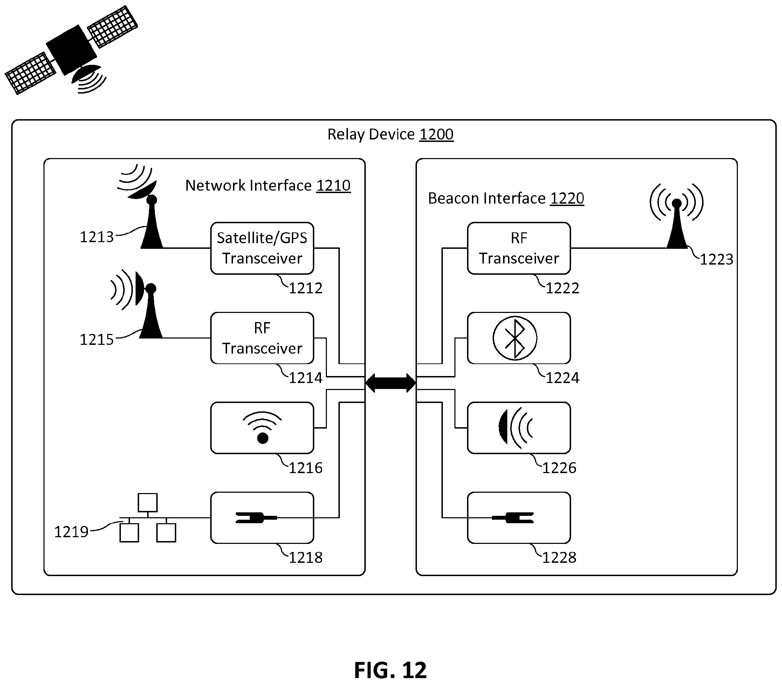

Relay device 1130 can be any type of device that relays communications between beacon controllers 1110, 1112, 1114, and 1116 and beacon devices 1140, 1142, 1144, and 1146. Relay device 1130 can be configured to receive control commands from beacon controllers 1110, 1112, 1114, and 1116 via network 1120, and forward the control commands to beacon devices 1140, 1142, 1144, and 1146. Relay device 1130 can be configured to receive update information from beacon devices 1140, 1142, 1144, and 1146, and transmit the update information to beacon controllers 1110, 1112, 1114, and 1116 via network 1120. Detailed description of a relay device suitable for implementation as relay device 1130 will be provided with respect to FIG. 12.

Any one of more of beacon devices 1140, 1142, 1144, and 1146 can be controlled remotely by any one of beacon controllers 1110, 1112, 1114, and 1116. For example, any one or more of beacon devices 1140, 1142, 1144, and 1146 can receive signaling codes from any one of beacon controllers 1110, 1112, 1114, and 1116, and emit beacon signals according to the signaling codes. As another example, any one or more of beacon devices 1140, 1142, 1144, and 1146 can receive commands to change one or more of their functions, such as the frequency or magnitude of the beacon signals. Beacon devices 1140, 1142, 1144, and 1146 can have unique identifications and can be individually controlled, or can be controlled as a group by beacon control signals from any of beacon controllers 1110, 1112, 1114, and 1116.

The arrangement illustrated in FIG. 11 is exemplary and system 1100 may be implemented in a number of different configurations without departing from the scope of the present invention. For example, one or more of beacon controllers 1110, 1112, 1114, and 1116 can directly communicate with relay device 1130, as opposed to being connected via network 1120. Further, additional components can be included in system 1100. For example, additional relay devices 1130 can be included, each relay device 1130 corresponding to a respective one of beacon devices 1140, 1142, 1144, and 1146. In addition, beacon devices 1140, 1142, 1144, and 1146 can be configured to communicate with each other by using, for example, communication module 1030 that is installed in each one of beacon devices 1140, 1142, 1144, and 1146.

FIG. 12 schematically illustrates a relay device 1200, according to an illustrated embodiment. Relay device 1200 can be implemented as relay device 1130 in FIG. 11. Relay device 1200 includes a network interface 1210 and a beacon interface 1220. Network interface 1210 facilitates transfer of signals between network 1120 and relay device 1200. Beacon interface 1220 facilitates transfer of signals between relay device 1200 and one or more beacon devices, such as beacon devices 1140, 1142, 1144, and 1146.

Network interface 1210 includes one or more of a satellite/GPS transceiver 1212, a radio frequency (RF) transceiver 1214, a Wifi® transceiver 1216, and a hard wire connector 1218. Satellite/GPS transceiver 1212 is connected to a satellite antenna 1213 to transmit or receive satellite internet signals to and from network 1120. Satellite/GPS transceiver 1212 is also configured to receive and decode GPS satellite signals for obtaining geographic location information and ultra-precise clock time. Satellite/GPS transceiver 1212 can be implemented by All in One GSM/GRPS Q52 transceiver manufactured by Wavecom®, and/or Antenova® M10478-A1 transceiver manufactured by Antenova®. RF transceiver 1214 is connected to an RF antenna 1215 to transmit and receive RF signals configured with pre-established protocol. The RF signals can be transmitted to and from a beacon controller installed with a similar RF transceiver. RF transceiver 1214 can be implemented by MTCMR-C1-N3 transceiver manufactured by Multi-Tech Systems Inc. WiFi® transceiver 1216 is configured to transmit and receive signals based on a WiFi® standard. WiFi® transceiver 1216 can be implemented by RN1810-I/RM100 transceiver manufactured by Microchip Technology Inc. Hard wire connector 1218 can be directly connected to a land line or switched public networks via a local area network (LAN) 1219.

Beacon interface 1220 includes one or more of an RF transceiver 1222, a Bluetooth® transceiver 1224, an optical transceiver 1226, and a hard wire connector 1228. RF transceiver 1222 is connected to an RF antenna 1223 to transmit and receive RF signals having a predetermined frequency such as, for example, 2.4 GHz. The 2.4 GHz operating frequency makes it possible to configure very compact electronics and requires a relatively short antenna. However, with such a high operating frequency, the transmission is limited to mostly line-of-sight, making it susceptible to blockage by topography, buildings, vehicles, and other impediments. Therefore, in some applications, the RF signals can have a lower operating frequency, i.e., a longer wavelength, or a frequency other than 2.4 GHz. The RF signals can be transmitted to and from one or more of beacon devices 1140, 1142, 1144, and 1146. Bluetooth® transceiver 1224 is configured to transmit and receive signals to and from one or more of beacon devices 1140, 1142, 1144, and 1146 in accordance with the Bluetooth® wireless communication standard. Bluetooth® communication technology makes it possible to configure very compact electronics, requires less power, needs only a very small antenna, and uses a standardized communication protocol which is now in wide usage. These advantages do, however, come at a price of greatly shortened communications range. For beacon applications, Bluetooth® may be usable where its very compact size, and omnidirectional capability can provide advantages when the required communication distance is short. Bluetooth® transceiver 1224 can be implemented by CC2564MODNCMOET transceiver manufactured by Texas Instrument. Optical transceiver 1226 is configured to transmit and receive optical link signals to and from one or more of beacon devices 1140, 1142, 1144, and 1146. The optical link signal can have a predetermined wavelength such as, for example, 950 nm. The present embodiment is not limited to the 950 nm wavelength, but extends both to longer as well as shorter wavelengths to provide greater range as well as immunity to noise. Optical transceiver 1226 can be implemented by RPM5537-H14E2A transceiver manufactured by Rohm Semiconductor. Hard wire connector 1228 can be directly connected to one or more of beacon devices 1140, 1142, 1144, and 1146.

Relay device 1200 can be powered by an internal electrical power source such as a battery, external sources such as power from a vehicle or power line, or by solar power. As relay device 1200 may be configured as is a pass-through device that requires no operator action, it is a desirable application for powering by use of solar power. In such case, relay device 1200 can further include a solar panel.

In some embodiments. all or portions of the functions of relay device 1200 can be integrated with one or more of beacon devices 1140, 1142, 1144, and 1146, giving the beacon device the ability to connect to network 1120 directly without the need for a relay device.

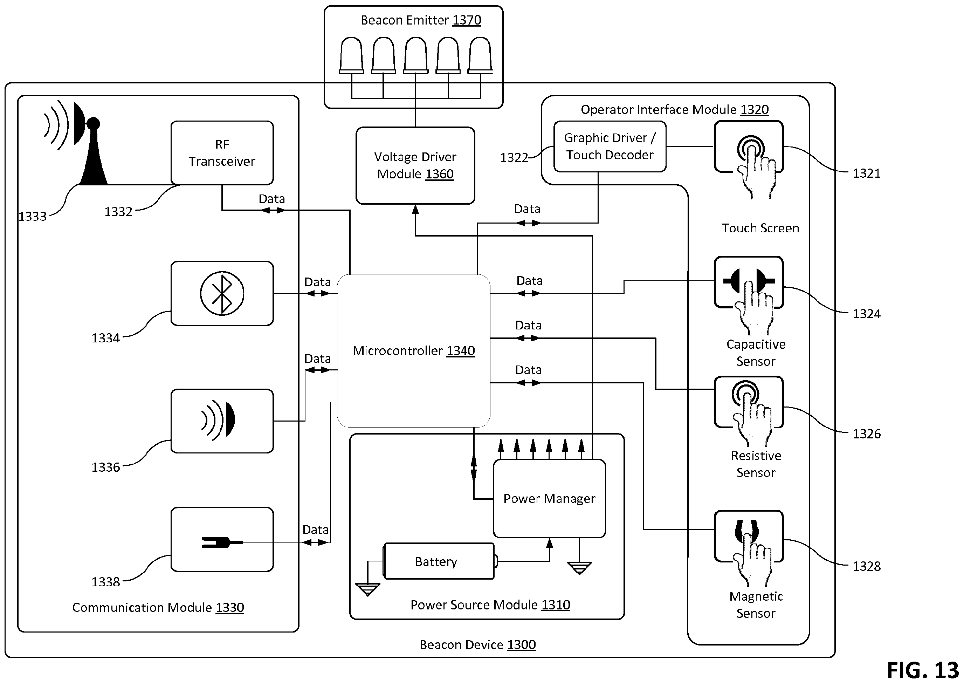

FIG. 13 schematically illustrates a beacon device 1300, according to an illustrated embodiment. Beacon device 1300 can be implemented as one of beacon devices 1140, 1142, 1144, and 1146 in FIG. 11. In the embodiment shown in FIG. 13, beacon device 1300 includes a power source module 1310, an operator interface module 1320, a communication module 1330, a microcontroller 1340, a voltage driver module 1360, and a beacon emitter 1370. Power source module 1310, microcontroller 1340, voltage driver module 1360, and beacon emitter 1370 are similar to power source module 1010, microcontroller 1040, voltage driver module 1060, and beacon emitter 1070 in FIG. 10, and therefore detailed descriptions of these components are not repeated. Although not illustrated in FIG. 13, beacon device 1300 can also include a clock module and a current monitor module, such as clock module 1050 and current monitor module 1080 illustrated in FIG. 10.

Communication module 1330 facilitates the transfer of signals between beacon device 1300 and relay device 1200, or between beacon device 1300 and another beacon device having a similar structure as beacon device 1300. Communication module 1330 includes one or more of an RF transceiver 1332, a Bluetooth® transceiver 1334, an optical transceiver 1336, and a hard wire connector 1338. RF transceiver 1332 is connected to an RF antenna 1333 to transmit and receive RF signals having the pre-determined frequency to and from RF transceiver 1222 of relay device 1200, or to and from an RF transceiver 1332 of the other beacon device. Bluetooth® transceiver 1334 is configured to transmit and receive signals in accordance with the Bluetooth® wireless communication standard to and from Bluetooth® transceiver 1224 of relay device 1200, or to and from a Bluetooth® transceiver of the other beacon device. Optical transceiver 1336 is configured to transmit and receive optical link signals having a predetermined wavelength (e.g., 950 nm) to and from optical transceiver 1226 of relay device 1200, or to and from an optical transceiver of the other beacon device. In order to transmit or receive optical link signals to or from another optical transceiver, optical transceiver 1336 is required to be pointed at the other optical transceiver. The high directionality of such optical link communication makes it nearly impossible for hostile forces to detect or jam. Hard wire connector 1338 can be connected to hard wire connector 1218 of relay device 1200, or to a hard wire connector of the other beacon device.

In some embodiments, the signals transmitted to and from communication module 1330 can be encrypted. Such encryption makes beacon device 1300 more difficult to copy by makers of counterfeit devices, or makes difficult the use of any devices that may have fallen into hostile possession.

Operator interface module 1320 is configured to receive input of an operation as sensed data. Operator interface module 1320 can transmit the sensed data to microcontroller 1340 so that microcontroller 1340 can control the function of beacon device 1300 based on the sensed data. Operator interface module 1320 can include one or more of a touch screen 1321, a graphic driver and touch decoder 1322, a capacitive sensor 1324, a resistive sensor 1326, and a magnetic sensor 1328. Touch screen 1321 uses transparent materials that couple effectively with a display made of either a matrix of individual LEDs or a screen with full graphic capability. With such a display, cues to an operator can be presented in real time to guide the operator through complex functions that are beyond the complexity of non-interactive methods. Graphic driver and touch decoder 1322 is configured to supply power and signals to touch screen 1321. Capacitive sensor 1324 is configured to sense variations of a capacitance. Capacitive sensor 1324 uses non-mechanical sensing technology to sense an operator's input. Capacitive sensor 1324 is intrinsically water proof but less robust, as dirt and water when in significant amounts can confuse detection electronics. Resistive sensor 1326 is configured to sense variations of a resistance due to the point of pressure of an operator. Greatly increased functional capabilities are possible as the input of sliding motion creates a multiplicity of points that can be decoded as gestures that seem very natural and, with the proliferation of smartphones, familiar to a user. Magnetic sensor 1328 is configured to sense variations of a magnetic field that may be generated by a magnet that is moved by the operator or an external device such as a solenoid that generates the magnetic field electrically and that is controlled by the operator around beacon device 1300. Magnetic sensor 1328 is intrinsically water proof and less sensitive to dirt than mechanical contact switches. In most situations, stray magnetic fields are not strong enough to cause misoperation. Operator interface module 1320 can transmit the sensed data to microcontroller 1040 so that microcontroller 1040 can control the function of beacon device 1000 based on the sensed data.

Traditionally, operator interfaces have been implemented as mechanical switching devices such as push-buttons, rotary switches, and slide switches. Such traditional means offer simplicity, low cost, and tactile feel, but can become large and costly when the information to be communicated is complex. Since beacon device 1300 may be used in applications where robustness is an important requirement, such traditional switching devices require sealing and protection in an adverse environment such as may be encountered in law enforcement or battle field applications. Increased robustness and capability benefits can be realized by the use of one or more advanced input means, such as touch screen 1321, capacitive sensor 1324, resistive sensor 1326, and/or magnetic sensor 1328. These advanced input means can be completely integrated into beacon device 1300, and can be supported by external controllers with coupling software and/or hardware.

In system 1100, relay device 1130 is needed to bridge communications between beacon controllers 1110, 1112, 1114, and 1116 and beacon devices 1140, 1142, 1144, and 1146. In some other embodiments, portions or all of the functions of relay device 1130 can be integrated into one or more beacon devices 1140, 1142, 1144, and 1146, such that there is no need for an additional relay device.

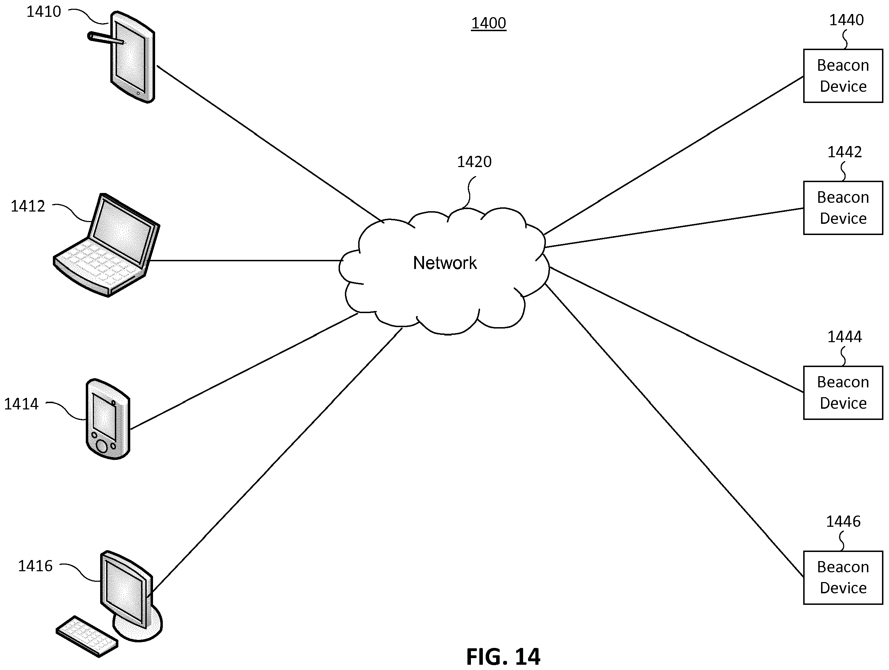

FIG. 14 schematically illustrates a beacon communication system 1400 according to such an embodiment. According to FIG. 14, system 1400 includes a plurality of beacon controllers 1410, 1412, 1414, and 1416, a network 1420, and a plurality of beacon devices 1440, 1442, 1444, and 1446. Beacon controllers 1410, 1412, 1414, and 1416 are similar to beacon controllers 1110, 1112, 1114, and 1116, and network 1420 is similar to network 1120. Therefore, detailed description of beacon controllers 1410, 1412, 1414, and 1416, and network 1420 is not repeated. Beacon devices 1440, 1442, 1444, and 1446 are capable of directly connecting to network 1420 without the need of a relay device.

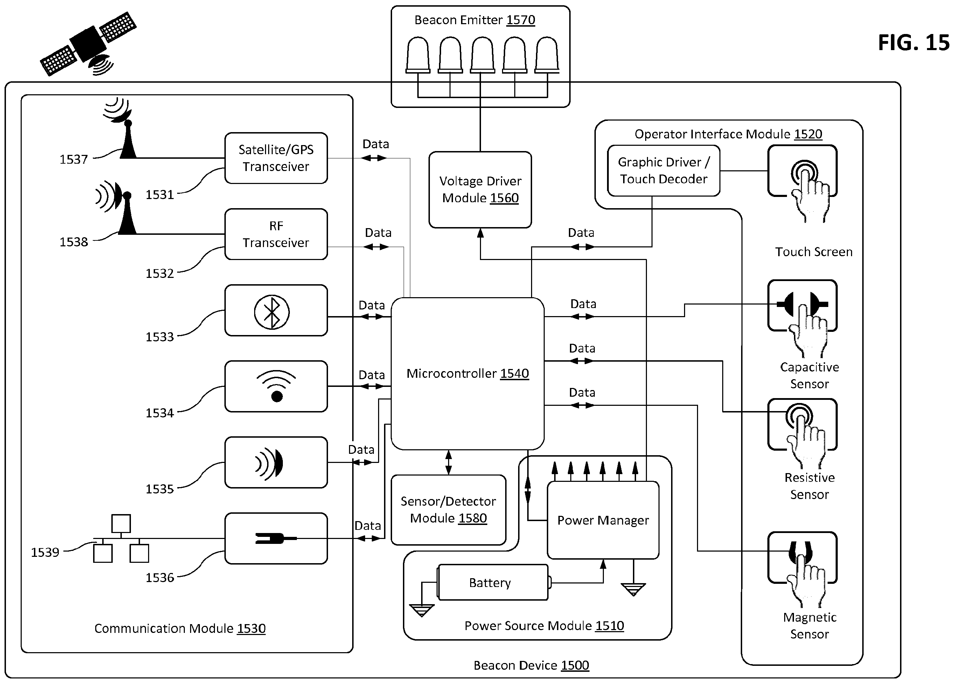

FIG. 15 schematically illustrates a beacon device 1500, according to an illustrated embodiment. Beacon device 1500 can be implemented as one of beacon devices 1440, 1442, 1444, and 1446 in FIG. 14. In the embodiment shown in FIG. 15, beacon device 1500 includes a power source module 1510, an operator interface module 1520, a communication module 1530, a microcontroller 1540, a voltage driver module 1560, a beacon emitter 1570, and a sensor and detector module 1580. Power source module 1510, microcontroller 1540, voltage driver module 1560, and beacon emitter 1570 are similar to power source module 1010, microcontroller 1040, voltage driver module 1060, and beacon emitter 1070 in FIG. 10, respectively, and operator interface module 1520 is similar to operator interface module 1320 in FIG. 13, and therefore detailed descriptions of these components are not repeated. Although not illustrated in FIG. 15, beacon device 1500 can also include a clock module and a current monitor module, such as clock module 1050 and current monitor module 1080 illustrated in FIG. 10.

Communication module 1530 facilitates the transfer of signals between beacon device 1500 and network 1420, or between beacon device 1500 and another beacon device having a similar structure as beacon device 1500. In the embodiment shown in FIG. 15, communication module 1530 includes one or more of a satellite/GPS transceiver 1531, an RF transceiver 1532, a Bluetooth® transceiver 1533, a Wifi® transceiver 1534, an optical transceiver 1535, and a hard wire connector 1536. Satellite/GPS transceiver 1531 is connected to a satellite antenna 1537 to transmit or receive satellite internet signals to and from network 1420. Satellite/GPS transceiver 1531 is also configured to receive and decode GPS satellite signals for obtaining geographic location information and ultra-precise clock time. RF transceiver 1532 is connected to an RF antenna 1538 to transmit and receive RF signals configured with pre-established protocol to and from a beacon controller installed with a similar RF transceiver, or the other beacon device installed with a similar RF transceiver. Bluetooth® transceiver 1533 is configured to transmit and receive signals in accordance with the Bluetooth® wireless communication standard. WiFi® transceiver 1534 is configured to transmit and receive signals based on a WiFi® standard. Optical transceiver 1535 is configured to transmit and receive optical link signals having a predetermined wavelength (e.g., 950 nm). Hard wire connector 1536 can be directly connected to a land line or switched public networks via a local area network (LAN) 1539.

Sensor and detector module 1580 can include any type of device that is capable of detect local conditions of beacon device 1500. For example, sensor and detector module 1580 can include an optical sensor for detecting the ambient light level and/or visibility of beacon device 1500. As another example, sensor and detector module 1580 can include a temperature transducer for sensing the ambient temperature of beacon device 1500.

In some embodiments, beacon controllers, such as beacon controllers 1110, 1112, 1114, and 1116 in FIG. 11 or beacon controllers 1410, 1412, 1414, and 1416 in FIG. 14, after sending control commands to beacon devices, such as beacon devices 1140, 1142, 1144, and 1146 in FIG. 11 or beacon devices 1440, 1442, 1444, and 1446 in FIG. 14, require feedback from the beacon devices in order to be able to verify that the commands given have been received, the beacon devices are working correctly, batteries contain sufficient charge, servicing is required, and so forth. Therefore, the beacon devices according to some embodiments of the present disclosure are provided with capabilities for two-way communications, so as to unburden a user, e.g., law enforcement personnel or a soldier, carrying the beacon device from the need to manage signaling code entry, code selection, function management, and other beacon operation tasks.

In particular, the beacon devices according to some embodiments of the present disclosure can transmit signals containing beacon information to the beacon controller. In one embodiment, a beacon device can be configured to report its location to a beacon controller based on GPS signals acquired by the beacon device, e.g., by means of satellite/GPS transceiver 1531 and satellite antenna 1537. In another embodiment, a beacon controller can remotely change the signaling pattern of one or more beacon devices in real time, to further enhance positive identification to friendly forces by individual beacon devices or groups of beacon devices. For example, such further enhanced position identification may take the form of a mimicking capability by which the beacon device or a display device in an aircraft is used to display exactly the same signaling pattern as a beacon on the ground. Such an enhanced capability can help to prevent a criminal or hostile entity equipped with similar devices from imitating a friendly entity. In another embodiment, a beacon controller can control a group of beacon devices to emit synchronized signaling patterns to increase the angular emission range as well as the strength of the composite signal to thereby increase the visible range of the group of beacon devices. In still another embodiment, sensor and detector module 1580 of beacon device 1500 can access local conditions such as the ambient light level, visibility, temperature, precipitation, etc., and to report the local conditions to a beacon controller, for assessment and adaptation. In still another embodiment, an integrated field information system can send warning or alert signals to individual beacon devices of individual law enforcement personnel or soldiers. In still another embodiment, a beacon controller can remotely deactivate any beacon device that cannot be accounted for or where the beacon device may have fallen into hostile hands. In still another embodiment, a beacon controller can remotely update beacon firmware of a beacon device without need to return the beacon device to a servicing facility.

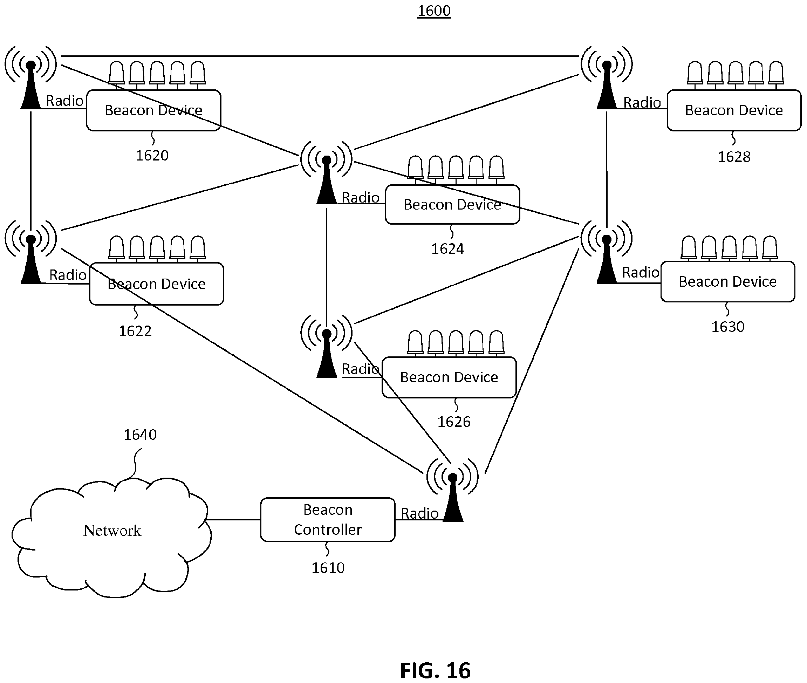

FIG. 16 schematically illustrates a beacon communication system 1600 according to still another illustrated embodiment. According to FIG. 16, system 1600 includes a beacon controller 1610 and a plurality of beacon devices 1620, 1622, 1624, 1626, 1628, and 1630. Each one of beacon controller 1610 and beacon devices 1620, 1622, 1624, 1626, 1628, and 1630 includes an RF transceiver, such that they can directly communicate with each other via RF signals, without the need for Internet or a relay device. In addition, beacon controller 1610 is capable of connecting to a device external to system 1600 via a network 1640. The structure of any one of beacon devices 1620, 1622, 1624, 1626, 1628, and 1630 can be similar to a previously illustrated beacon device, such as beacon device 1300 or 1500. In particular, each one of beacon devices 1620, 1622, 1624, 1626, 1628, and 1630 can include an RF transceiver which is connected to an RF antenna for transmitting and receiving RF signals having a pre-determined frequency to and from beacon controller 1610 or to and from other ones of beacon devices 1620, 1622, 1624, 1626, 1628, and 1630.

System 1600 can be configured to self create an adaptive network of communications. In particular, each one of beacon devices 1620, 1622, 1624, 1626, 1628, and 1630 can be configured to forward messages and/or commands to all other beacon devices within radio range which are programmed to monitor any communication signals that contain preassigned identifications codes. For example, beacon controller 1610 transmits a control signal to one of beacon devices 1620, 1622, 1624, 1626, 1628, and 1630, e.g., beacon device 1620, via its RF transceiver. In response to receiving the control signal, beacon device 1620 transmits the control signal to beacon device 1622 via its RF transceiver, beacon device 1622 then transmits the control signal to beacon device 1624 via its RF transceiver, and so on. In such manner, radio communication distance can be extended. In addition, self-healing can be provided around any non-working beacon device or a beacon device whose transmission is blocked by topography, buildings, vehicles, or other impediments.

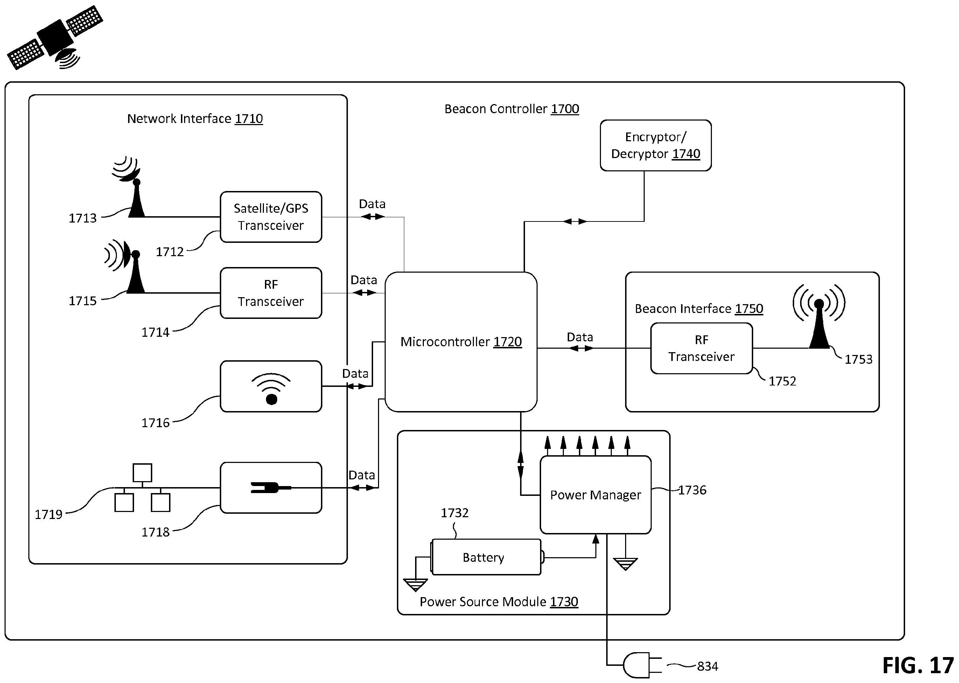

FIG. 17 schematically illustrates a beacon controller 1700, according to an illustrated embodiment. Beacon controller 1700 can be applied as beacon controller 1610 in FIG. 16. Beacon controller 1700 includes a network interface 1710, a microcontroller 1720, a power source module 1730, an encryptor/decryptor 1740, and a beacon interface 1750.

Network interface 1710 facilitates transfer of signals between beacon controller 1700 and an external network, such as network 1640 in FIG. 16. Network interface 1710 includes one or more of a satellite/GPS transceiver 1712, a radio frequency (RF) transceiver 1714, a Wifi® transceiver 1716, and a hard wire connector 1718. Satellite/GPS transceiver 1712 is connected to a satellite antenna 1713 to transmit or receive satellite internet signals to and from network 1640. Satellite/GPS transceiver 1712 is also configured to receive and decode GPS satellite signals for obtaining geographic location information and ultra-precise clock time. RF transceiver 1714 is connected to an RF antenna 815 to transmit and receive RF signals configured with pre-established protocol. The RF signals can be transmitted to and from a device external to system 1600 and installed with a similar RF transceiver. WiFi® transceiver 1716 is configured to transmit and receive signals based on a WiFi® standard. Hard wire connector 1718 can be directly connected to a land line or switched public networks via local area network (LAN) 1719.

Microcontroller 1720 can be any device that coordinates and selectively controls operation of other elements of beacon controller 1700. Power source module 1730 supplies power to microcontroller 1720 and other components of beacon controller 1700. In the embodiment of FIG. 17, power source module 1730 includes a battery 1732, a power connector 1734 to be connected to an external power source, and a power manager 1736 for managing the power supplied to microcontroller 1720 and other components of beacon controller 1700. Encryptor/decryptor 1740 encrypts the signals to be transmitted from beacon controller 1700, and decrypts the signals received by beacon controller 1700 by using one or more encryption keys. Beacon interface 1750 facilitates transfer of signals between beacon controller 1700 and one or more beacon devices, such as beacon devices 1620, 1622, 1624, 1626, 1628, and 1630. Beacon interface 1750 includes an RF transceiver 1752 which is connected to an RF antenna 1753 to transmit and receive RF signals having a predetermined frequency such as, for example, 2.4 GHz.

In some embodiments, beacon device 1300/1500 can further include a battery condition testing unit that is coupled to power source module 1310 or 1510. The battery condition testing unit can test the battery condition and transmit the test result to a power manager, so that the power manager can manage the power supply for beacon device 1300/1500 based on the test result.

In some embodiments, a group of beacon devices 1300/1500 can be respectively carried by a group of law enforcement personnel or soldiers. Beacon devices 1300/1500 so carried can be either synchro beacons or cascade beacons. When beacon devices 1300/1500 are cascade beacons, the law enforcement personnel or soldiers carrying beacon devices 1300/1500 are required to be positioned according to beacon unit numbers of beacon devices 1300/1500.

In some embodiments, a group of beacon devices 1300/1500 can be carried by a single user on various parts of the body. For example, a lead beacon device can be carried on the helmet of a soldier, while some follower beacon devices can be carried on the vest, sleeves, or backpack of a soldier. In such manner, light emission coverage is enhanced.

In some embodiments, beacon devices 1300/1500 can be automatically deactivated after emitting beacon signals for a predetermined period of time, or after receiving the last control signal from an operator for a predetermined period of time. When beacon device 1300/1500 is deactivated, it can be re-activated by an operator (e.g., a soldier) or by a remote controller.

Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A beacon device for control by a beacon controller external to the beacon device, the beacon device comprising:
a beacon emitter configured to emit beacon signals;
a microcontroller coupled to control the beacon emitter; and
a communication module coupled to the microcontroller and configured to transfer signals between the beacon device and the beacon controller.

2. The beacon device of claim 1, wherein the communication module of the beacon device includes a radio frequency transceiver configured to transfer radio frequency signals between the beacon device and the beacon controller.

3. The beacon device of claim 1 or 2, wherein the communication module of the beacon device is configured to transfer signals between the beacon device and the beacon controller via a network.

4. The beacon device of claim 3. wherein the network includes at least one of a local area network (LAN), a wide area network (WAN), a virtual private network, a dedicated intranet, the Internet, a cellular network, and/or a wireless network.

5. The beacon device of claim 3 or 4, wherein the communication module of the beacon device includes at least one of a satellite/GPS transceiver, a radio frequency transceiver, a Bluetooth® transceiver, a Wifi® transceiver, and a hard wire connector, for transferring signals between the beacon device and the beacon controller via the network.

6. The beacon device of any preceding claim, wherein the communication module of the beacon device is configured to transfer signals between the beacon device and a relay device for relaying communication between the beacon device and the beacon controller via a network,
the communication module including at least one of an RF transceiver, a Bluetooth® transceiver; and a hard wire connector for transferring signals between the beacon device and the relay device.

7. The beacon device of any preceding claim, wherein the communication module of the beacon device is configured to transfer signals between the beacon device and another beacon device,
the communication module including at least one of an RF transceiver, an operation transceiver, and a hard wire connector for transferring signals between the beacon device and the other beacon device.

8. The beacon device of any preceding claim, wherein the beacon device is configured to transmit signals containing beacon information to the beacon controller.

9. The beacon device of any preceding claim, wherein the beacon device further includes an operator interface module for receiving input from an operator,
the input module including at least one of a touch screen and a graphic driver and touch decoder, a capacitive sensor, a resistive sensor, and a magnetic sensor for receiving input from the operator.

10. A beacon controller for controlling a beacon device over a network, comprising:
a radio frequency transceiver configured to transfer radio frequency signals between the beacon controller and the beacon device for controlling the beacon device; wherein the beacon device is optionally a beacon device of any preceding claim.

11. The beacon controller of claim 10, further comprising a network interface configured to transfer signals between the beacon controller and a network,
the network interface including at least one of a satellite/GPS transceiver, a radio frequency transceiver, a Wifi® transceiver, and a hard wire connector for transfer signals between the beacon controller and the network.

12. The beacon controller of claim 10 or 11, wherein the network includes at least one of a local area network (LAN), a wide area network (WAN), a virtual private network, a dedicated intranet, the Internet, a cellular network, and/or a wireless network.

13. A relay device for relaying communication between a beacon device and a beacon controller via an external network, the relay device comprising:
a network interface configured to facilitate transfer of signals between the network and the relay device; and
a beacon interface configured to facilitate transfer of signals between the relay device and the beacon device; wherein the beacon device is optionally a beacon device of any of claims 1 - 9, and wherein the beacon controller is optionally a beacon controller of any of claims 10 - 12.

14. The relay device of claim 13, wherein the network interface of the relay device includes at least one of a satellite/GPS receiver/decoder, a radio frequency transceiver, a Wifi® transceiver, and a hard wire connector for transferring signals between the network and the relay device.

15. The relay device of claim 13 or 14, wherein the beacon interface of the relay device includes at least one of a radio frequency transceiver, a Bluetooth® transceiver, an optical transceiver, and a hard wire connector for transferring signals between the relay device and the beacon device.
